(19) Europäisches Patentamt
European Patent Office
Office européen des brevets

(11) EP 1 538 566 A2

(12) EUROPEAN PATENT APPLICATION

(43) Date of publication:
08.06.2005 Bulletin 2005/23

(51) Int Cl.7: G06T 9/00

(21) Application number: 04257378.2

(22) Date of filing: 29.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 01.12.2003 US 525827 P
12.01.2004 KR 2004002076

(71) Applicant: Samsung Electronics Co., Ltd.
Suwon-city, Gyeonggi-do (KR)

(72) Inventor: Han, Woo-jin
108-703 Jugong 2-danji Apt.
Yeongtong-gu Suwon-si Gyeonggi-do (KR)

(74) Representative: Waddington, Richard et al
Appleyard Lees,
15 Clare Road
Halifax HX1 2HY (GB)

(54) **Method and apparatus for scalable video encoding and decoding**

(57) A method and apparatus for scalable video and decoding are provided. A method for video coding includes eliminating temporal redundancy in constrained temporal level sequence from a plurality of frames constituting a video sequence input, and generating a bitstream by quantizing transformation coefficients obtained from the frames whose temporal redundancy has been eliminated. A video encoder for performing the encoding method includes a temporal transformation unit (10), a spatial transformation unit (20), a quantization unit (30), and a bit-stream generation unit (40). A video decoding method is in principle performed inversely to the video coding sequence, wherein decoding is performed by extracting information on encoded frames by receiving bit-streams input and interpreting them.

**FIG. 2**

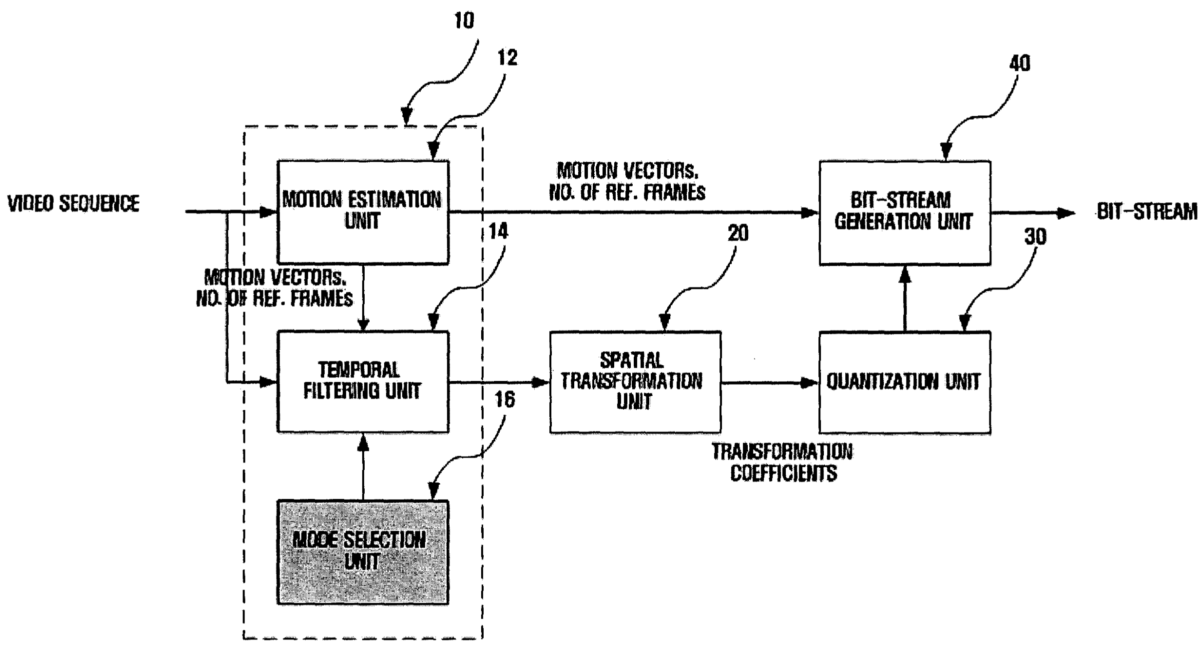


EP 1 538 566 A2

Printed by Jouve, 75001 PARIS (FR)

## Description

The present invention relates generally to video compression, and more particularly, to video coding having temporal scalability through motion compensated temporal filtering according to a constrained temporal level sequence.

Development of information communication technologies inducting the Internet has led to increase of video communication. However, consumers have not been satisfied with existing text-based communication schemes. To satisfy the consumers, multimedia data containing a variety of information including text, picture, music and the like has been increasingly provided. Multimedia data is usually voluminous such that it requires a storage medium having large capacity. Also, a wide bandwidth is required for transmitting the multimedia data. For example, a picture of 24 bit true color having a resolution of 640x480 needs the capacity of 640x480x24 per frame, namely, data of approximately 7.37 Mbits. In this respect, a bandwidth of approximately 1200 Gbits is needed so as to transmit this data at 30 frames/second, and a storage space of approximately 1200 Gbits is needed so as to store a movie having a length of 90 minutes. Taking this into consideration, it is necessary to use a compressed coding scheme in transmitting multimedia data including text, picture or sound.

A basic principle of data compression is to eliminate redundancy between the data. The data redundancy implies three types of redundancies: spatial redundancy, temporal redundancy, and perceptional-visual redundancy. Spatial redundancy refers to duplication of identical colors or objects in an image, temporal redundancy refers to no or little variation between adjacent frames in a moving picture frame or successive repetition of same sounds in audio, and perceptional-visual redundancy refers to dullness of human's vision and sensation to high frequencies. By eliminating these redundancies, data can be compressed. Types of data compression can be divided into loss/lossless compression depending upon whether source data is lost, intra-frame/inter-frame compression depending upon whether data is compressed independently relative to each frame, and symmetrical/asymmetrical compression, depending upon whether compression and restoration of data require for the same period of time. In addition, when a total end-to-end delay time in compression and decompression does not exceed 50 ms, this is referred to as real-time compression. When frames have a variety of resolutions, this is referred to as scalable compression. Lossless compression is mainly used in compressing text data or medical data, and loss compression is mainly used in compressing multimedia data. On the other hand, intra-frame compression is generally used in eliminating spatial redundancy and inter-frame compression is used in eliminating temporal redundancy.

Respective transmission media to transmit multimedia data have different capacities by medium. Transmission media in current use have a variety of transmission speeds, covering ultra high-speed communication network capable of transmitting data of tens Mbits per second, mobile communication network having the transmission speed of 384 kbits per second, and so on. In conventional video coding algorithms, e.g., MPEG-1, MPEG-2, H.263 or H.264, temporal redundancy is eliminated by motion compensation based on a motion compensated prediction coding scheme and a spatial redundancy is eliminated by a transformation coding scheme. These schemes have good performance in compression but they have little flexibility for a true scalable bit-stream because main algorithms of the schemes employ recursive approaches. For this reason, recent research has been focused on wavelet-based scalable video coding. Scalable video coding refers to video coding having scalability, the property of which enables parts of a bit-stream compressed to be decoded. Because of this property, various videos can be attained from a bit-stream. The term "scalability" herein is used to collectively refer to special scalability available for controlling video resolution, signal-to-noise ratio (SNR) scalability available for controlling video quality and temporal scalability available for controlling frame rates of video, and combinations thereof.

Among numerous techniques used in a wavelet-based scalable video coding scheme, motion compensated temporal filtering (MCTF) proposed by Ohm (J. R. Ohm, "Three-dimensional subband coding with motion compensation," IEEE Trans. Image Proc., Vol. 3, No. 5, Sept. 1994) and improved by Choi and Wood (S. J. Choi and J. W. Woods, "Motion compensated 3-D subband coding of video," IEEE Trans. Image Proc., Vol. 8, No. 2, Feb. 1999) is a core technique to eliminate temporal redundancy and perform scalable video coding with temporal flexibility. In MCTF, the coding operation is performed on a Group of Pictures (GOP) basis, and pairs of a current frame and a reference frame are temporally filtered in the direction of motion. This technique will be described in more detail with reference to FIG. 1a.

FIG. 1a illustrates temporal decompositions in scalable video coding and decoding processes employing an MCTF scheme.

In FIG. 1a, an L frame indicates a low frequency or average frame and an H frame indicates a high frequency or difference frame. As illustrated therein, to perform the coding process, frame pairs at the lowest temporal level are first temporarily filtered, to thereby transform the frames at the low temporal level into L frames and H frames at a higher temporal level, and pairs of the transformed L frames are again temporarily filtered and transformed into frames at the higher temporal levels. An encoder generates a bit-stream by use of an L frame at the highest level and H frames, which has passed through wavelet transformation. The frames marked with darker color in FIG. 1a indicate that they are subject to the wavelet transformation. A temporal level sequence progresses from the frames at a lower level to those at a higher level. A decoder restores frames by operating darker-colored frames obtained through inverse wavelet transformation in the order of frames at the higher level to those at the lower level. Two L frames at second temporal level are restored by use of an L frame and an H frame at third temporal level and four L frames at first temporal level are restored by use of two L frames and two H frames at second temporal level. Finally, eight frames are restored by use of four L frames and four H frames at the first temporal level. The video coding employing the original MCTF scheme has temporally flexible scalability, but it may have some disadvantages such as poor performance in uni-directional motion estimation and low quality at low temporal rates and so on. There have been a number of research endeavors to improve these disadvantages. One of them is unconstrained MCTF (UMCTF) proposed by Turaga and Mihaela (D. S. Turaga and Mihaela van der Schaar, "Unconstrained motion compensated temporal filtering," ISO/IEC JTC1/SC29/WG11, MPEG03/M8388, 2002). UMCTF will be described with reference to FIG. 1b.

FIG. 1b illustrates temporal decompositions in scalable video coding and decoding processes employing a UMCTF scheme.

In the UMCTF scheme, a plurality of reference frames and bi-directional filtering are available for use, thereby providing more general frameworks. In addition, non-dyadic temporal filtering may be possible in the UMCTF scheme by using the proper insertion of an unfiltered frame (A frame). Instead of filtered L frames, the use of A frames improves the visual quality at lower temporal levels since the visual quality of L frames degrades severely sometimes due to the lack of accurate motion estimation. In past research, many experimental results have shown that UMCTF without an update-step has better performance than original MCTF. For this reason, the specific form of UMCTF, which has no update-step, is generally used although the most general form of UMCTF allows an adaptive choice of low-pass filters.

Many applications that need low end-to-end delay, such as video conferencing, require low encoder-side delay as well as low decoder-side delay. Since both MCTF and UMCTF analyze from frames at the lowest temporal level, the encoder-side delay should be as long as a size of the GOP. However, the video coding having the delay equivalent to the GOP size is actually unacceptable for many real-time applications. Although it is known that UMCTF can reduce the delay requirement by limiting the number of future reference frames, there is no explicit solution to control the end-to-end delay. In addition, encoder-side temporal scalability is not provided, for which video coding cannot stop at any temporal level and can transmit no bit-stream. However, the encoder-side temporal scalability is very useful to real-time bi-directional vide streaming applications. In other words, the operation at the current temporal level should be suspended and the bit-stream should immediately be transmitted when operation is incapable in the encoding process. Conventional schemes have drawbacks in this regard.

In view of the problems described above, there is needed a video coding algorithm which has comparatively little influence on the visual quality and is capable of controlling end-to-end delay so as to provide a low end-to-end delay. In addition, a video coding algorithm to provide temporal frameworks from the highest temporal level to the lowest temporal level is needed so as to allow both the encoder-side and the decoder-side to have temporal scalability.

Accordingly, the present invention has been conceived to satisfy the needs described above. The present invention provides video coding and decoding method and apparatus wherein an end-to-end delay time can be controlled and an encoder-side has also temporal scalability.

According to the present invention there is provided an apparatus and method as set forth in the appended claims. Preferred features of the invention will be apparent from the dependent claims, and the description which follows.

According to an aspect of the present invention, a method for video coding comprises eliminating temporal redundancy in a constrained temporal level sequence from a plurality of frames constituting a video sequence input, and generating a bit-stream by quantizing transformation coefficients obtained from the frames whose temporal redundancy has been eliminated.

The frames input in the elimination step may be frames whose spatial redundancy has been eliminated after passing through wavelet transformation.

The transformation coefficients in the generation step may be obtained by performing spatial transformation of frames whose temporal redundancy has been eliminated. The spatial transformation is performed based upon wavelet transformation.

Temporal levels of the frames may have dyadic hierarchal structures.

The constrained temporal level sequence may be the sequence of the frames at the highest to lowest temporal levels and the sequence of the frames having the lowest to the highest indexes in the same temporal level. The constrained temporal level sequence is periodically repeated on a GOP size basis. At this time, the frame at the highest temporal level has the lowest frame index of a GOP among the frames constituting the GOP.

Elimination of temporal redundancy is performed on a GOP basis, wherein the first frame at the highest temporal level in the GOP is encoded as an I frame and then temporal redundancy from respective remaining frames is eliminated according to the constrained temporal level sequence, and for this elimination, each of the remaining frames refers one or more reference frames at temporal levels higher than itself or refers one or more reference frames whose frame indexes are lower than itself, among the frames at temporal level equivalent to itself. The reference frames referred to eliminate the temporal redundancy from respective frames may comprise one or two frames whose index difference is the minimum, between one or more frames having temporal levels higher than themselves.

The reference frames referred by each frame in the temporal redundancy elimination process further comprise themselves (frames currently in the filtering process). The frames currently in the filtering process are encoded as I frames where a ratio that they refer themselves in the temporal redundancy elimination process is greater than a predetermined value.

The reference frames referred in the temporal redundancy elimination process may further comprise one or more frames at the next GOP, whose temporal levels are higher than each of the frames currently in the filtering process.

The constrained temporal level sequence is determined depending upon a coding mode. The constrained temporal level sequence determined depending upon a coding mode is periodically repeated on a GOP basis in the same coding mode. The frame at the highest temporal level, among the frames constituting the GOP, may have the lowest frame index.

In the generation step, information on the coding mode is added to the bit-stream.

In the generation step, information on the sequences of spatial elimination and temporal elimination is added to the bit-stream.

The coding mode is determined depending upon an end-to-end delay parameter D, where the constrained temporal level sequence is progressed from the frames at the highest to the lowest temporal levels among the frames having the indexes not exceeding D in comparison of the frame at the lowest temporal level, which has not yet temporally been filtered, and from the frames at the lowest to the highest indexes in the same temporal level. The elimination of temporal redundancy is performed on a GOP basis, wherein the first frame at the highest temporal level in the GOP is encoded as an I frame and then temporal redundancy from respective remaining frames is eliminated according to the constrained temporal level sequence, and for this elimination, each of the remaining frames refers one or more reference frames at temporal levels higher than itself or refers one or more reference frames whose indexes are lower than itself, among the frames at temporal level equivalent to itself. Preferably, the reference frames referred to eliminate the temporal redundancy from respective frames comprise one or two frames whose index difference is the minimum, among one or more frames having temporal levels higher than themselves.

The frame at the highest temporal level within the GOP has the lowest frame index.

In the temporal redundancy elimination process one more reference frames referred by each frame include themselves. The frames currently in the filtering process are encoded as I frames where the ratio that they refers themselves in the temporal redundancy elimination process is over the predetermined value of ratio.

The reference frames referred in the temporal redundancy elimination process further comprise one or more frames at the next GOP, whose temporal levels are higher than each of the frames currently in the filtering process and whose temporal distances from each of the frames currently in the filtering process are within D.

According to an another aspect of the present invention, a video encoder comprises a temporal transformation unit eliminating temporal redundancy in a constrained temporal level sequence from a plurality of frames input, a spatial transformation unit eliminating spatial redundancy from the frames, a quantization unit quantizing transformation coefficients obtained in the processes of eliminating temporal and spatial redundancies, and a bit-stream generation unit generating bit-streams by use of the quantized transformation coefficients.

The video temporal transformation unit eliminates temporal redundancy of the frames and transmits the frames whose temporal redundancy has been eliminated to the spatial transformation unit, and then the spatial transformation unit eliminates spatial redundancy of the frames whose temporal redundancy has been eliminated, and thereby the transformation coefficients are obtained. At this time, the spatial transformation unit eliminates the spatial redundancy of the frames through wavelet transformation.

The spatial transformation encoder eliminates redundancy of the frames through wavelet transformation and transmits the frames whose spatial redundancy has been eliminated to the temporal transformation unit, and then the temporal transformation unit eliminates temporal redundancy of the frames whose spatial redundancy has been eliminated, and thereby the transformation coefficients are obtained.

The temporal transformation unit comprises a motion estimation unit obtaining motion vectors from a plurality of frames input, a temporal filtering unit temporally filtering in constrained temporal level sequence from the plurality of frames input, by use of the motion vectors, and a mode selection unit determining the constrained temporal level sequence. The constrained temporal level sequence which the mode selection unit determines is based on a periodical function of GOP size.

The mode selection unit determines the constrained temporal level sequence of frames at the highest to the lowest temporal levels and of frames at the smallest to the largest frame indexes in the same temporal level. The constrained temporal level sequence determined by the mode selection unit may be periodically repeated on a GOP size basis.

The mode selection unit determines the constrained temporal level sequence by reference to the delay control parameter D, where the determined temporal level sequence is the sequence of frames at the highest to the lowest temporal level among the frames of indexes not exceeding D in comparison of the frame at the lowest level, whose temporal redundancy is not eliminated, and the sequence of the frames at the smallest to the largest frame indexes in the same temporal level.

The temporal filtering unit eliminates the temporal redundancy on a GOP basis according to the constrained temporal level sequence selected by the mode selection unit, where the frame at the highest temporal level within the GOP is encoded as an I frame, and then temporal redundancy from respective remaining frames is eliminated, and for this elimination, each of the remaining frames refers one or more reference frames at temporal levels higher than itself or refers one or more reference frames whose indexes are lower than itself, among the frames at temporal level equivalent to itself. The reference frame referred to eliminate the temporal redundancy from the frames may comprise one or two frames, having the minimum index difference from the frame currently in the filtering process, among one or more frames at higher temporal levels than the currently filtering frames.

The frame at the highest temporal level within the GOP has the lowest temporal frame index.

The temporal filtering unit further includes the frame currently in the filtering process to the reference frames referred when eliminating the temporal redundancy from the currently filtered frame. At this time, the temporal filtering unit encodes the currently filtered frame as an I frame where the ratio that the currently filtered frame refers itself is over the predetermined value.

The bit-stream generation unit generates the bit-stream including information on the constrained temporal level sequence. The bit-stream generation unit may generate the bit-stream including information on the sequences of eliminating temporal and spatial redundancies (redundancy elimination sequences) to obtain the transformation coefficients.

According to an another aspect of the present invention, a video decoding method comprises extracting information on encoded frames by receiving bit-streams input and interpreting them, obtaining transformation coefficients by inverse-quantizing the information on the encoded frames, and restoring the frames through inverse-temporal transformation of the transformation coefficients in the constrained temporal level sequence.

In the restoration step, the frames are obtained through the inverse-temporal transformation of the transformation coefficients and subsequently through inverse-wavelet transformation of the resultants.

In the restoration step, the frames are obtained through inverse-spatial transformation of the coefficients before the inverse temporal transformation, and subsequently through inverse-temporal transformation of the resultants. Preferably, the inverse-spatial transformation employs an inverse-wavelet transformation.

The constrained temporal level sequence refers to the sequence of the frames at the highest to the lowest temporal level, and to the frames of the largest to the smallest indexes in the same temporal level. The constrained temporal level sequence is periodically repeated on a GOP size basis. The inverse-temporal transformation refers to inverse temporal filtering of the frames, starting from the encoded frames at the highest temporal level and processing to the constrained temporal level sequence, within the GOP.

The constrained temporal level sequence is determined according to the coding mode information extracted from the bit-stream input. The constrained temporal level sequence is periodically repeated on a GOP size basis in the same coding mode.

The coding mode information determining the constrained temporal level sequence may comprise an end-to-end delay control parameter D, where the constrained temporal level sequence determined by the coding mode information is progressed from the encoded frames at the highest to the lowest temporal levels among the frames having the indexes not exceeding D in comparison of the frame at the lowest temporal level, which has not yet been decoded, and from the frames at the lowest to highest indexes in the same temporal level.

The redundancy elimination sequence is extracted from the bit-stream input.

According to another aspect of the present invention, a video decoder restoring frames from a bit-stream input comprises a bit-stream interpretation unit interpreting the bit-stream to extract information on encoded frames therefrom, an inverse-quantization unit inverse-quantizing the encoded frame information to obtain transformation coefficients therefrom, an inverse spatial transformation unit performing inverse-spatial transformation process, and an inverse temporal transformation unit performing inverse-temporal transformation process in a constrained temporal level sequence, wherein frames are restored through inverse-temporal transformation processes of the transformation coefficients

The video decoder further comprises an inverse-wavelet transformation unit performing inverse-wavelet transformation of the resultants obtained by operating the transformation coefficients with the inverse temporal transformation unit.

The video decoder further comprises an inverse spatial transformation unit performing inverse spatial transformation of the transformation coefficients, wherein the resultants through the inverse spatial transformation of the transformation coefficients are inverse-temporally transformed by the inverse temporal transformation unit.

The inverse spatial transformation unit performs the inverse spatial transformation based on the inverse-wavelet transformation, and the constrained temporal level sequence starts from the encoded frames at the highest to the lowest temporal levels. The constrained temporal level sequence is periodically repeated on a GOP size basis.

The inverse temporal transformation unit performs inverse temporal transformation on a GOP basis, and the encoded frames are inverse-temporally filtered, starting from the frames at the highest temporal level to those at the lowest temporal level within the GOP.

The bit-stream interpretation unit extracts information on coding mode from the bit-stream input and determines the constrained temporal level sequence according to the coding mode information. The constrained temporal level sequence is periodically repeated on a GOP basis.

The coding mode information determining the constrained temporal level sequence comprises an end-to-end delay control parameter D, where the constrained temporal level sequence determined by the coding mode information is progressed from the encoded frames at the highest to the lowest temporal levels among the frames having the indexes not exceeding D in comparison of the frame at the lowest temporal level, which has not yet been decoded, and from the frames at the lowest to highest indexes in the same temporal level.

The redundancy elimination sequence is extracted from the input stream.

For a better understanding of the invention, and to show how embodiments of the same may be carried into effect, reference will now be made, by way of example, to the accompanying diagrammatic drawings in which:

FIG. 1a illustrates temporal decompositions in scalable video coding and decoding processes employing an MCTF scheme;

FIG. 1b illustrates temporal decompositions in scalable video coding and decoding processes employing a UMCTF scheme;

FIG. 2 is a functional block diagram illustrating a scalable video encoder according to an exemplary embodiment of the present invention;

FIG. 3 is a functional block diagram illustrating a scalable video encoder according to an exemplary embodiment of the present invention;

FIG. 4 is a functional block diagram illustrating a scalable video decoder according to an exemplary embodiment of the present invention;

FIG. 5 illustrates a basic concept of a successive temporal approximation and referencing (STAR) algorithm according to an exemplary embodiment of the present invention;

FIG. 6 illustrates many possible connections between frames in the STAR algorithm;

FIG. 7 illustrates referencing between GOPs according to an exemplary embodiment of the present invention;

FIG. 8 illustrates possible connections between frames in non-dyadic temporal filtering according to an exemplary embodiment of the present invention;

FIG. 9 illustrates possible connections between frames in temporal filtering where an end-to-end delay control parameter is zero, according to an exemplary embodiment of the present invention;

FIG 10 illustrates possible connections between frames in temporal filtering where the end-to-end delay control parameter is one, according to an exemplary embodiment of the present invention;

FIG. 11 illustrates possible connections between frames in temporal filtering where the end-to-end delay control parameter is three, according to an exemplary embodiment of the present invention;

FIG. 12 illustrates possible connections between frames in temporal filtering where the end-to-end delay control parameter is three and a GOP size is 16, according to an exemplary embodiment of the present invention;

FIG. 13 illustrates forward-, backward-, bi-directional, and intra prediction modes;

FIG. 14 illustrates possible connections between frames, comprising four predication modes in temporal filtering according to an exemplary embodiment of the present invention;

FIG. 15a illustrates an example of video coding in fast changed video sequence according to the exemplary embodiment of FIG. 14;

FIG. 15b illustrates an example of video coding in slow changed video sequence according to the exemplary embodiment of FIG. 14;

FIG. 16 is a graph showing peak signal to noise ratio (PSNR) results for a Foreman common intermediate format (CIF) sequence in a video coding scheme;

FIG. 17 is a graph showing PSNR results for a Mobile CIF sequence in a video coding scheme;

FIG. 18 is a graph showing PSNR results for a Foreman CIF sequence with different end-to-end delay settings in a video coding scheme;

FIG. 19 is a graph showing PSNR results for Mobile CIF sequence with different end-to-end delay settings in a video coding scheme; and

FIG. 20 is a graph showing PSNR results when a part of a fast changed scene from the movie "Matrix 2" is encoded by use of four prediction modes and is encoded without the of use the four prediction modes.

Hereinafter, exemplary embodiments of the present invention will be described in detail with reference to the accompanying drawings.

FIG. 2 is a functional block diagram illustrating a scalable video encoder according to an exemplary embodiment of the present invention.

A scalable video encoder receives multiple frames input to constitute a video sequence and compresses them to generate a bit-stream. To perform this job, the scalable video encoder comprises a temporal transformation unit 10 eliminating temporal redundancy between multiple frames, a spatial transformation unit 20 eliminating special redundancy between the frames, a quantization unit 30 quantizing transformation coefficients generated by eliminating temporal and spatial redundancies, and a bit-stream generation unit 40 generating a bit-stream combining quantized transformation coefficients and other information.

The temporal transformation unit 10 comprises a motion estimation unit 12, a temporal filtering unit 14 and a mode selection unit 16, in order to compensate for motion between frames and perform temporal filtering.

The motion estimation unit 12 obtains motion vectors for motion compensation between each macroblock of frames currently in operation of temporal filtering and each macroblock of reference frames corresponding thereto. Information on the motion vectors is supplied to the temporal filtering unit 14, and the temporal filtering unit 14 performs temporal filtering for a plurality of frames by use of the information on the motion vectors. In this exemplary embodiment, the temporal filtering is performed on a GOP basis.

The mode selection unit 16 determines a sequence for temporal filtering. The temporal filtering in this exemplary embodiment is basically processed in the sequence starting from a frame at the highest temporal level to a frame to the lowest temporal level within the GOP. When the frames are at the same temporal level, the temporal filtering is processed in the sequence starting from a frame of the lowest index to a frame of the highest index. The frame index is an index to indicate a temporal sequence between frames constituting the GOP. Thus, where the number of frames constituting one GOP is n, the last frame in the temporal sequence has an index of n-1, by defining a first frame of the GOP, which is the earliest frame of the GOP, as 0.

In this exemplary embodiment, the frame of the lowest index is used as the frame having the highest temporal level among the frames constituting the GOP, by way of example. This should be interpreted to mean that selection of the other frame at the highest temporal level within the GOP is also covered by the technical concept of the present invention.

The mode selection unit 16 can perform video coding process in delay constrained mode to reduce end-to-end delay generated in the video coding process. In this case, the mode selection unit 16 may constrain temporal filtering so as to be the sequence of the frames at the highest to lowest temporal levels as described above, according to the value of an end-to-end delay control parameter D. In addition, the mode selection unit 16 may change the sequence of temporal filtering or perform temporal filtering with deletion of some frames, considering a limitation of operation capability in the encoding process. Hereunder, the term "constrained temporal level sequence" will be used, which means the sequence of temporal filtering considering all relevant factors. The constrained temporal level sequence specifies that temporal filtering starts from the frame at the highest temporal level.

Frames from which temporal redundancy is eliminated, that is, frames which are temporarily filtered, pass through the spatial transformation unit 20 to eliminate spatial redundancy therefrom. The spatial transformation unit 20 eliminates the special redundancy from the frames which have temporally been filtered, by use of spatial transformation. In the present exemplary embodiment, a wavelet transformation is used. In the wavelet transformation currently known to the public, one frame is quartered, a quarter of the frame is replaced with a reduced image (L image) quartered in area but almost identical to the whole image in the frame, and the other three quarters of the frame are replaced with information (H image) available for use in restoring the whole image. Likewise, the L frame can again be quartered and replaced with an L image having a quarter area and information to restore the L image. This kind of compression scheme using the wavelet transformation has been applied to a JPEG2000 compression scheme. Spatial redundancy of the frames can be eliminated through the wavelet-based transformation. Unlike DCT transformation, in the wavelet transformation, original image information is stored in transformed image which is reduced in dimension, thereby enabling video coding having spatial scalability by use of the reduced image. However, the wavelet transformation scheme is herein used by way of example. Where there is no need to accomplish spatial scalability, the DCT scheme may be used as a conventional moving image compression scheme such as MPEG-2.

Temporally filtered frames are transformed into transformation coefficients through spatial transformation. The transformation coefficients are transmitted to the quantization unit 30 and then quantized. The quantization unit 30 quantizes the transformation coefficients which are floating number-type coefficients and transforms them into integer-type transformation coefficients. That is, the number of bits to represent image data can be reduced through quantization. In this exemplary embodiment, a process for quantizing transformation coefficients is performed through an embedded quantization scheme. Since quantization for transformation coefficients is performed through the embedded quantization scheme, the amount of information needed for a video sequence can be reduced through the quantization and SNR scalability can be obtained through the embedded quantization. The term "embedded" is used to indicate that an encoded bit-stream implies quantization. In other words, compressed data is generated in a visually important order and is tagged by visual importance. Actually, the quantization (or visual importance) level can serve in a decoder or a transmission channel. If transmission bandwidth, storage capacity, and display resources are permitted, an image can be restored with high quality. Otherwise, the image is quantized only as much as tolerable by the most constrained resources. Conventional embedded quantization algorithms include embedded zerotree wavelet (EZW), set partitioning in hierarchical trees (SPIHT), embedded zero block coding (EZBC), embedded block coding with optimal truncation (EBCOT) and the like. In the present exemplary embodiment, any of the already known algorithms can be used.

The bit-stream generation unit 40 generates a bit-stream combining information regarding encoded images and information regarding motion vectors obtained from the motion estimation unit 12 by attaching a header thereto. In this exemplary embodiment, information regarding a constrained temporal level sequence, a bit-stream and delay parameter and the like are included in the information regarding the bit-stream.

Where the wavelet transformation is used to eliminate spatial redundancy, the shape of the original image of the transformed frame remains. For this reason, unlike the DCT-based moving picture coding scheme, the image can pass through spatial transformation, temporal transformation and quantization in sequence, to generate a bit-stream. Another exemplary embodiment of this process will be described with reference to FIG. 3. FIG. 3 is a functional block diagram illustrating a scalable video encoder according to an exemplary embodiment of the present invention.

Referring to FIG. 3, a scalable video encoder comprises a spatial transformation unit 60 eliminating spatial redundancy from multiple frames, a temporal transformation unit 70 eliminating temporal redundancy from the frames, a quantization unit 80 quantizing transformation coefficients obtained by eliminating both spatial and temporal redundancies, and a bit-stream generation unit 90 generating a bit-stream combining encoded image information and other information.

The term "transformation coefficient" has generally referred to a value generated by spatial transformation since spatial transformation has been applied after temporal filtering, in conventional moving picture compression. This term has alternatively referred to a DCT coefficient where the value is generated through DCT transformation. Accordingly, the term "wavelet coefficient" has been used where the value is generated by wavelet transformation. In the present invention, the term "transformation coefficient" indicates the value generated by eliminating both spatial and temporal redundancies from multiple frames before they are (embedded) quantized. In this regard, it should be noted that the term "transformation coefficient" means a coefficient generated through spatial transformation in FIG. 2, as well as a coefficient generated through temporal transformation in FIG. 3.

The spatial transformation unit 60 eliminates spatial redundancy between multiple frames constituting a video sequence. In this case, the spatial transformation unit 60 eliminates the spatial redundancy existing within frames by use of wavelet transformation. The frames from which spatial redundancy is eliminated, that is, spatially transformed frames, are transmitted to the temporal transformation unit 70.

The temporal transformation unit 70 eliminates temporal redundancy of the spatially transformed frames. To perform this job, the temporal transformation unit 70 comprises a motion estimation unit 72, a temporal filtering unit 74 and a mode selection unit 76. In this exemplary embodiment, the temporal transformation unit 70 operates in the same manner as in FIG. 2, except that the frames input are spatially transformed frames, unlike FIG. 2. Further, a difference between the exemplary embodiment of FIG. 3. and the exemplary embodiment of FIG. 2. is that the temporal transformation unit 70 generates transformation coefficients for quantization of the frames whose temporal redundancy is eliminated after their spatial redundancy has been eliminated.

The quantization unit 80 quantizes the transformation coefficients to generate quantized image information (encoded image information) and transmits the generated image information to the bit-stream generation unit 40. Similar to FIG. 2, embedded quantization is performed and SNR scalability relative to the bit-stream to be finally generated is obtained.

The bit-stream generation unit 90 generates a bit-stream combining encoded image information and information regarding motion vectors by attaching a header thereto. At this time, an end-to-end delay control parameter and a temporal level sequence can be included, similar to FIG. 2.

The bit-stream generation unit 40 of FIG. 2 and the bit-stream generation unit 90 of FIG. 3 may include information regarding the sequences of eliminating temporal redundancy and spatial redundancy (hereinafter referred to as a "redundancy elimination sequence") in the bit-stream so as to allow the decoder-side to determine whether the video sequence is encoded according to FIG. 2 or the video sequence is encoded according to FIG. 3. The redundancy elimination sequence can be included in the bit-stream with the use of various schemes. It is possible to choose one scheme as a basic scheme and separately indicate the other schemes in the bit-stream. For example, if the scheme used in FIG. 2 is chosen as a basic scheme, the bit-stream generated by the video scalable encoder of FIG. 2 may be indicated without information on the redundancy elimination sequence but may be indicated only with the redundancy elimination sequence generated by the scalable video encoder of FIG. 3. To the contrary, information regarding both redundancy elimination sequences may both be indicated in both schemes used in FIG. 2 and FIG. 3.

A bit-stream having excellent coding efficiency can also be generated by creating a scalable video encoder having both scalable video encoder-side functions according to FIGs. 2 and 3 respectively, by encoding and comparing video sequences in the schemes of FIGs. 2 and 3. In this case, the redundancy elimination sequence can be included in the bit-stream. The redundancy elimination sequence can be determined on a sequence basis or a GOP basis. In the former case, the redundancy elimination sequence should be included in the header of a video sequence; in the latter case, the redundancy elimination sequence should be included in the header of a GOP.

The exemplary embodiments illustrated in FIGs. 2 and 3 can both be realized with hardware, but they may also be realized by any device having software modules and the computing capability for executing them.

FIG. 4 is a functional block diagram illustrating a scalable video decoder according to an exemplary embodiment of the present invention.

A scalable vide decoder comprises a bit-stream interpretation unit 100 interpreting a bit-stream input and extracting each component constituting the bit-stream, a first decoding unit 200 restoring the image encoded according to FIG. 2 and a second decoding unit 300 restoring the image encoded according to FIG. 3.

The first and second decoding units 200 and 300 can be realized with hardware or software modules. When they are implemented with hardware or software modules, they may be implemented in a separate manner or an integrated manner. If they are implemented in an integrated manner, the first and second decoding units 200 and 300 restores the eliminated data from the bit-stream obtained in the bit-stream interpretation unit 100, by applying the redundancy elimination sequence in an inverse manner.

The video scalable decoder can be implemented so as to restore all of the images encoded in different redundancy elimination sequences, but it may also be implemented so that only the image encoded in either of the redundancy elimination sequences can be restored.

The bit-stream interpretation unit 100 interprets the bit-stream input, extracts encoded image information (encoded frames) and determines the sequence for redundancy elimination. If the redundancy elimination sequence is subject to decoding by the first decoding unit 200, the video sequence is restored through the first decoding unit 200. If the redundancy elimination sequence is subject to decoding by the second decoding unit 300, the video sequence is restored by the second decoding unit 300. In addition, the bit-stream interpretation unit 100 interprets the bit-stream, to thereby determine a constrained temporal level sequence, i.e., the sequence for temporal filtering of the frames when temporal redundancy is eliminated. In this exemplary embodiment, the constrained temporal level sequence can be determined based on the value of a delay control parameter determining a coding mode. In a process of restoring the video sequence from the encoded image information, decoding by the first decoding unit 200 will be first described and decoding by the second decoding unit 200 will then be described.

Information on the encoded frames input into the first decoding unit 200 is inverse-quantized by an inverse-quantization unit 210 and transformed into transformation coefficients. The transformation coefficients are inverse-spatially transformed by an inverse-spatial transformation unit 220. The inverse-spatial transformation type is dependent upon spatial transformation type of encoded frames. Where wavelet transformation is used for spatial transformation, inverse wavelet transformation is performed for the inverse-spatial transformation. Where DCT transformation is used for spatial transformation, inverse-DCT transformation is performed. The transformation coefficients are transformed into I frames and H frames, all of which are temporally inverse-filtered, through inverse-spatial transformation. In this regard, an inverse-temporal transformation unit 230 restores the frames constituting a video sequence through inverse-temporal transformation in constrained temporal level sequence. The constrained temporal level sequence may be obtained by interpreting the bit-stream input by the bit-stream interpretation unit 100. For inverse-temporal transformation, the inverse-temporal filtering unit 230 uses motion vectors obtained by interpreting the bit-stream.

Information on encoded frames input into the second decoding unit 300 is inverse-quantized by the inverse-quantization unit 310 and transformed into transformation coefficients. The transformation coefficients are inverse-temporally transformed by the inverse-temporal transformation unit 320. The motion vectors for inverse-temporal transformation and the constrained temporal level sequence can be obtained from information acquired through interpretation by the bit-stream interpretation unit 100 of the bit-stream. Information on encoded images, having passed through inverse-temporal transformation, is transformed into frames in state of having passed through spatial transformation. The frames in the state of passing through spatial transformation are inverse-spatially transformed in the inverse-spatial transformation unit 330 and restored to the frames constituting the video sequence. Inverse-spatial transformation used in the inverse-spatial transformation unit 330 employs an inverse wavelet transformation scheme.

A process of temporally transforming frames in the constrained temporal level sequence with maintaining temporal scalability and controlling the end-to-end delay will be described in more detail.

According to the present invention, it is possible for the frames to have temporal scalability on both the encoder-side and the decoder-side and the end-to-end delay can be controlled, through a successive temporal approximation and referencing algorithm, namely, a STAR algorithm.

FIG. 5 illustrates a basic concept of the STAR algorithm.

To describe the basic concept of the STAR algorithm, every frame at each temporal level is represented as a node, and the referencing relation between frames is represented as an arc. At each temporal level, only necessary frames are located, for example, only the first frame of a GOP is needed at the highest temporal level. In this exemplary embodiment, the F(0) frame is at the highest temporal level. At the next temporal level, temporal resolution is successively refined, and missing frames with high frequency are predicted by original frames with already processed frame index. If the size of the GOP is eight, the frame of index 0 is encoded as an I frame at the highest temporal level, and the frame of index 4 is encoded as an inter-frame (H frame) at the next temporal level by use of the original frame of index 0. Then, frames of indexes 2 and 6 are encoded as inter-frames by using original frames of indexes 0 and 4. Lastly, frames of indexes 1, 3, 5 and 7 are encoded as inter-frames by using original frames of indexes 0, 2, 4 and 6. Herein, the term "original frames" mainly refers to frames constituting a video sequence, but it may also be used to refer to frames obtained by decoding frames previously encoded. In a decoding process, the frame of index 0 is first decoded. Then, the frame of index 4 is decoded by reference to the decoded frame of index 0. In the same manner, the frames of indexes 2 and 6 are decoded by reference to the decoded frames of indexes 0 and 4. Last, the frames of indexes 0, 2, 4 and 6 are decoded as inter-frames by reference to the decoded frames of indexes 1, 3, 5 and 7. As illustrated in FIG. 5, both the encoder-side and the decoder-side can use the same temporal process flow, which can provide temporal scalability in the encoder-side. The encoder-side can stop at any temporal level, but the decoder-side should decode the frames up to the target temporal level. That is, since the frame at the highest temporal level is first encoded, the encoder-side can acquire the temporal scalability. For example, if an encoding process stops when the frames of indexes 0, 4, 2 and 6 have been encoded, the decoder-side decodes the frames of indexes 0 and 4 by reference to the decoded frames of indexes 0, 2 and 6 by reference to the decoded frames of indexes 0 and 4. In this case, the decoder-side can output frames 0, 2, 4 and 6. It is preferable that the frame at the highest temporal level (F (0) in this exemplary embodiment) is encoded into an I frame rather than an L frame requiring for operation with other frames, so as to maintain the encoder-side temporal scalability.

To compare, conventional scalable video coding algorithms based on MCTF or UMCTF can have the decoder-side temporal scalability but the encoder-side has trouble in securing the temporal scalability. Referring to FIGs. 1a and 1b, an L frame or an A frame at the temporal level 3 is required to perform the decoding process. However, the L frame or the A frame at the highest temporal level can be obtained only after the encoding process completes, in case of MCTF and UMCTF algorithms, but the decoding process can stop at any temporal level.

The requirements to maintain the temporal scalability at both the encoder- and the decoder-sides will be described hereinbelow.

It is assumed that F(k) is a $k^{th}$ frame and T(k) is a temporal level of F(k). Temporal scalability is established if a frame at a certain temporal level is encoded by reference to the frame at a temporal level equal to or less than the temporal level. For example, the frame of index 4 cannot refer to the frame of index 2. This is because the encoding process cannot stop at the frames of indexes 0 and 4 if such reference is permitted. In other words, the frame of index 2 can be encoded when the frame of index 4 is encoded previously. A set $R_k$ of reference frames which can be referred by the frame F(k) is defined as in Equation (1).

$$R_k = \{F(l) \mid (T(l) > T(k)) \text{ or } ((T(l) = T(k)) \text{ and } (l <= k))\} \qquad (1)$$

where "l" indicates a frame index.

In Equation (1), ((T(l)=T(k)) and (l=k)) means that frame(k) performs temporal filtering with reference to itself in the temporal filtering process (intra mode), which will be described later.

The encoding and decoding processes using the STAR algorithm will be described below.

Encoding process operations:

(1) Encode the first frame of a GOP as an I frame.
(2) For the frames at next temporal level, make motion prediction and encode inter-prediction residuals using possible reference frames satisfying Equation (1). At the same temporal level, the frames are encoded in the left-to-right order (in the order of the lowest to highest frame indexes).
(3) Repeat operation (2) until all the frames are encoded, and then encode the next GOP until encoding for all the frames is completed.

Decoding process operations:

(1) Decode the first frame of a GOP.
(2) Decode the frames at next temporal level using proper reference frames among already decoded frames. At the same temporal level, the frames are decoded in the left-to-right order (in the order of the lowest to highest frame indexes).
(3) Repeat operation (2) until all the frames are decoded, and then decode the next GOP until decoding for all the frames is completed.

As illustrated in FIG. 5, the frame marked I is intra-coded (referring no other frames), and the frames marked H are of a high frequency subband. The high frequency subband indicates the frame is encoded with reference to one or more frames.

In FIG. 5, where the size of GOP is eight, the temporal level of a frame is in the sequence of 0, 4, (2, 6), (1, 3, 5, 7) for illustrative purposes. In addition, there is little problem in terms of the encoder-side temporal scalability and the decoder-side temporal scalability even where it is in the sequence of 1, 5, (3, 7), (0, 2, 4, 6). Likewise, the temporal level sequence of 2, 6, (0, 4), (1, 3, 5, 7) is permissible. In other words, any frames at the temporal level that can satisfy the encoder-side temporal scalability and the decoder-side temporal scalability are permissible.

However, where the frame is in the temporal level sequence of 0, 5, (2, 6), (1, 3, 4, 7), this can satisfy the encoder-side temporal scalability and the decoder-side temporal scalability, but it is not preferable because the intervals between frames are uneven.

FIG. 6 illustrates many possible connections between frames in the STAR algorithm.

Referring to FIG. 6, examples of possible connections between frames for temporal filtering will be described.

According to Equation (1), the frame F(k) can refer many frames. This property allows the STAR algorithm to be suitable for using multiple reference frames. In this exemplary embodiment, possible connections between frames where the size of GOP is eight are shown. The arc starting from a frame and returning back to the frame (called self-looped frame) indicates that the frame is predicted in an intra mode. All original frames having previously encoded indexes including those at the H frame position in the same temporal level can be used as reference frames whereas only L or A frames among the original frames at the H frame position among the frames in the same level can be referred in most conventional methods. This feature constitutes a difference between the present invention and the conventional methods. For example, in conventional methods, F(5) can refer F(3) and (F1) but F(5) cannot refer F(0), F(2) and F(4).

Although multiple reference frames increase memory needed for temporal filtering and processing delay enormously, the possibility of supporting this feature is valuable.

As described above, it is assumed that the frame at the highest temporal level within one GOP has the lowest frame index by way an example. In addition, it should be noted that the frame at the highest temporal level can have another frame index.

For the sake of convenience, the number of reference frames used to encode a frame will be limited to two for bi-directional predication, and one for uni-directional prediction in the experimental results.

FIG. 7 illustrates referencing between GOPs according to one exemplary embodiment of the present invention. In FIG. 7, a STAR coding algorithm using bi-directional prediction and cross-GOP optimization is shown.

The STAR algorithm can encode frames by reference to frames of other GOPs, which is referred to as cross-GOP optimization. UMCTF also supports cross-GOP optimization because both UMCTF and STAR coding algorithms use A or I frames which are not temporally filtered. Referring to FIGs. 5 and 6, prediction error in the frame of index 7 is the sum of prediction errors of frames of indexes 0, 4 and 6. However, if the frame of index 7 refers the frame of index 0 of the next GOP (the frame of index 8 if computed with the current GOP), this drift of prediction errors can be reduced significantly. Furthermore, since the frame of index 0 of the next GOP is intra-coded, the quality of the frame of index 7 can be significantly improved.

FIG. 8 illustrates possible connections between frames in non-dyadic temporal filtering according to another exemplary embodiment of the present invention.

As the UMCTF coding algorithm naturally supports non-dyadic temporal decomposition by inserting A-frames arbitrarily, the STAR algorithm can also support non-dyadic temporal decomposition by changing the graph structure in a simple manner. This exemplary embodiment shows an example of STAR decomposition supporting 1/3 and 1/6 temporal decompositions. Any arbitrary fractions of the full frame rate can easily be obtained in the STAR algorithm by changing the graph structure.

The STAR algorithm specifies that the encoder-side and the decoder-side have the same processing sequence at the temporal level, and supports multiple reference frames and cross-GOP optimization as described above. Some of these features can be accomplished in a limited manner by the conventional methods, but it is not easy to control the end-to-end delay with the conventional methods. Conventionally, a method of reducing the size of the GOP has been used to reduce the delay, but which caused a conspicuous degradation in performance. In using the STAR algorithm, the end-to-end delay until the frame is restored to a video sequence after passing though encoding and decoding processes again in video sequence, can be easily controlled by introducing a concept of the end-to-end delay control parameter (D).

Referring to FIGs. 9 through 12, the STAR algorithm will be considered where delay is constrained.

The temporal scalability conditions as in Equation (1) should be slightly modified for delay control, which will be defined by Equation (2).

$$R_k^D=\{F(l)|\ (\ (T(l)>T(k)\ )\ \text{and}\ (\ (l-k)<=D)\ )\text{or}\ (\ (T(l)=T(k)\ )\ \text{and}\ (l<=k))\} \quad (2)$$

where $R_k^D$ represents a set of reference frames which currently encoded frames can refer, when the permissible delay is defined as D. To interpret Equation (2), every frame at the higher temporal level cannot always be reference frames. In particular, the difference between index of the reference frame and that of the currently coded frame does not exceed D. In this regard, it should be noted that D indicates the maximum end-to-end delay permissible to encode F(k). Referring to FIG. 7, the frame of index 4 is needed to encode the frame of index 2, and thus, it is sufficient if D equals two. However, it should be noted that the frame of index 2 is needed to encode the frame of index 1 and the frame of index 4 is needed to encode the frame of index 2, and thus, D equals three. If the frame of index 1 does not refer the frame of index 2 and the frame of index 5 does not refer the frame of index 6, it is sufficient if D equals two. To sum up, D should be set to three in order to encode the structure as illustrated in FIG. 7.

It should also be noted that multiple reference frames or cross-GOP optimization described above can be applied even in the case of Equation (2). This feature is advantageous in that delay control can be accomplished in a direct and simple manner.

An advantage of the STAR algorithm approach is that there is no need to sacrifice the temporal scalability. Conventional methods to reduce the size of GOP cause reduction of the dimension of maximum temporal level, so that the temporal scalability of the decoder side is severely limited. For example, where the size of GOP is eight, the frame rates available for selection by the decoder-side are limited to 1, 1/2, 1/4 and 1/8. If the size of the GOP is set to four to define D as three, the selectable frame rates are 1, 1/2 and 1/4. When the size of the GOP is two, the selectable frame rates are only 1 and 1/2. As described above, reduction of the GOP size has a disadvantage that the efficiency of video coding is severely reduced. To the contrary, the decoder-side's temporal scalability is not affected even when D is extremely limited to zero by use of the STAR algorithm, i.e.,there is only damage to the encoder-side's scalability. That is, when the GOP size is eight and D is zero, if the processing capability of the encoder-side on a GOP basis is limited to two in the number of frames, the frames of indexes 0 and 1 should be encoded and then transmitted to the decoder-side. In this case, the decoder-side can restore the video sequence having the 1/4 frame rate but temporal intervals of the restored video frames are uneven.

Examples of different end-to-end delays will be described with reference to FIGs. 9 through 12.

FIG. 9 illustrates possible connections between frames in temporal filtering where a delay control parameter is set to 0, according to another exemplary embodiment of the present invention.

In FIG. 9, the temporal structure of the STAR algorithm supporting bi-directional prediction and cross-GOP optimization, limitation of delay when a value of D is set to zero is illustrated. Since the delay control parameter is zero, the cross-GOP optimization is automatically deactivated, and all the frames refer only the frames later in time (namely, frames of lower indexes). Thus, frames are transmitted in the sequence of 0, 1, 2, 3, 4, 5, 6 and 7. That is, one frame is processed and immediately transmitted to the decoder-side. In this case, delay exists only for I frame buffering. This feature is also retained in the decoder-side, for which the decoder can start decoding as soon as the frame reaches. The final delay is merely two frames (67 ms at 30 Hz) inclusive of operation delay by the decoder-side. But in this case, the performance is somewhat degraded in comparison of the setting of a value of D to larger than zero.

FIG 10 illustrates possible connections between frames in temporal filtering where the delay control parameter is one, according to an exemplary embodiment of the present invention.

In this exemplary embodiment, the property of cross-GOP optimization is automatically activated. All the frames at the lowest temporal level can be predicted by use of bi-directional prediction, and the last frame of a GOP can refer the first frame of the next GOP. In this case, the coding sequence of frames is 0, 2, 1, 4, 3, 6, 5, 7 and 8 (0 of the next frame). The delay for buffering two frames on the encoder side and the delay for operation on the decoder side are only needed. The total delay time is three frames (100 ms at 30 Hz), and bi-directional prediction is applied to most frames and cross-GOP optimization is applied to the last frame.

FIG. 11 illustrates possible connections between frames in temporal filtering where a delay time control parameter is three, according to an exemplary embodiment of the present invention.

If D is three, the frame of index 2 can refer the frame of index 4, and the frame of index 6 can refer the first frame of the next GOP as illustrated in FIG. 11.

The reason why D is three, not two, is because a delay of as much as two frames is sufficient since the frame of index 4 is necessary to encode the frame of index 2, but the frame of index 2 is necessary to encode the frame of index 1, and the frame of index 2 needs delay of as much as two frames, thereby requiring for three frames as a total delay time. When the delay time is three, reference to all of the frames, except for reference to the frame of index 8 (0 frame of the next frame) by the frame of index 4, is possible. The coding sequence at this time is 0, 4, 2, 1, 3, 8 (0 frame of the next GOP), 6, 5 and 7. If D is four, the structure shown in FIG. 7 is possible. Extension of the GOP size to 16 is illustrated in FIG. 12.

FIG. 12 illustrates possible connections between frames in temporal filtering where a delay time control parameter is three, when a GOP size is 16, according to another exemplary embodiment of the present invention. In this case, the coding sequence of frames (same as the transmission sequence) is 0, 4, 2, 1, 3, 8, 6, 5, 7, 12, 10, 9, 11, 16 (0 frame of the next GOP), 14, 13 and 15. It should be noted that the STAR algorithm specifies that the total end-to-end delay can be controlled only by one parameter D. This feature simplifies delay control, thereby resulting in graceful degradation of coding efficiency in terms of total end-to-end delay. This flexible delay in one framework is very useful because the total end-to-end delay can be easily controlled according to properties of any application to the coding system without significant modification. In uni-directional video stream, the total end-to-end delay is of no significance. Thus, the value of D can be set to have the maximum value (e.g., 1/2 of a GOP size). Rather, the total end-to-end delay is deemed as a very important issue in bi-directional video conference. In this case, if the total end-to-end delay is set to less than two, the total end-to-end delay can be very short even if the coding efficiency is slightly degraded. Relationship between total end-to-end delay and the value of delay parameter D is illustrated in Table 1.

Table 1

| GOP size = 8 | |
|---|---|
| Value of D | Total end-to-end delay |
| 0 | 2 frames (67 ms at 30 Hz) |
| 1 | 3 frames (100 ms at 30 Hz) |
| 2 | 5 frames (167 ms at 30 Hz) |
| 4 | 9 frames (300 ms at 30 Hz) |
| GOP size = 16 | |
| Value of D | Total end-to-end delay |
| 0 | 2 frames (67 ms at 30 Hz) |
| 1 | 3 frames (100 ms at 30 Hz) |
| 2 | 5 frames (167 ms at 30 Hz) |
| 4 | 9 frames (300 ms at 30 Hz) |
| 8 | 17 frames (567 ms at 30 Hz) |

The total end-to-end delay T can be simply represented as in Equation (3).

$$T=\min(2, 2D+1) \quad (3)$$

where T represents a value of the total end-to-end delay, whose unit is one frame time. The experimental results regarding PSNR degradation due to the total end-to-end delay will be described later.

FIG. 13 illustrates forward, backward, bi-directional, and intra-macroblock prediction modes.

Basically, the STAR algorithm supports multi-mode temporal predictions. As illustrated in FIG. 13, predictions in forward prediction mode (1), backward prediction mode (2), bi-directional prediction mode (3) and intra-macroblock prediction mode (4) are supported. The first three modes have already been supported in connection with scalable video coding under conventional methods, but the STAR algorithm improves coding efficiency of fast-changed video sequences by adding intra-prediction mode thereto.

Determination by an inter-macroblock prediction mode will first be described hereunder.

Since STAR algorithm allows bi-directional prediction and multiple reference frames, forward, backward and bi-directional predictions can be easily implemented. Although a well-known HVBSM algorithm can be used for this setting, the present exemplary embodiment will be limited to fixed block size motion estimation scheme. Let E(k, -1) be the $k^{th}$ sum of absolute differences (SAD) with forward prediction and B(k, -1) be total motion bits to quantize motion vectors of forward prediction. Similarly, assume that E(k, +1) is the $k^{th}$ SAD with backward prediction mode, B(k, +1) is the total motion bits to be assigned to quantize motion vectors of backward prediction mode, E(k, *) is the $k^{th}$ SAD with bi-directional prediction mode, and B(k, *) is the total motion bits to be assigned to quantize motion vectors with bi-directional prediction mode. The costs for forward, backward and bi-directional prediction modes can be described as in Equation (4)

$$C_f = E(k,-1) + \lambda B(k,-1),$$

$$C_b = E(k,1)+\lambda B(k,1),$$

and

$$C_{bi} =E(k,*)+\lambda\{B(k,-1)+B(k,1)\} \quad (5)$$

where $C_f$, $C_b$ and $C_{bi}$ refer to costs for forward, backward and bi-directional prediction modes, respectively. $\lambda$ is a Lagrangian coefficient to control the balance between the motion and texture (image) bits. Since the scalable video encoder cannot know the final bit-rates, $\lambda$ should be optimized with respect to the nature of the video sequence and bit-rates mainly used in the target application. By computing minimum costs therefor as defined in Equation (4), the best optimized inter-macroblock prediction mode can be determined.

Next, determination by intra-macroblock prediction mode will be described hereunder.

In some video sequences, scenes are changed very fast. In the extreme case, one frame having absolutely no temporal redundancy with neighboring frames can be observed. To overcome this situation, the coding method implemented with MC-EZBC supports a feature being "adaptive to GOP size." This adaptiveness to GOP size stops temporal decomposition and encodes the frame as an L frame when the number of unconnected pixels is larger than the predetermined threshold (typically 30% of total pixels). This method may be applied to the STAR algorithm, but more flexible approaches borrowed from the concept of intra-macroblock modes used in standard hybrid encoders are used in this exemplary embodiment. Generally, open-loop codecs including the codec by means of STAR algorithm cannot use any information on neighboring macroblocks because of prediction drift, whereas a hybrid codec can use the multiple intra-macroblock prediction mode. Thus, DC prediction is employed in this exemplary embodiment for intra-predication mode. In this mode, a macroblock is intra-predicted by its DC values for Y, U and V components. If the cost for intra-prediction mode is less than the best cost at the inter-prediction mode described above, the intra-prediction mode can be selected. In this case, the difference between original pixel and DC value and the difference between three DC values in lieu of motion vectors are encoded. The cost for intra-prediction mode can be defined as in Equation (5).

$$C_i = E(k,0) + \lambda B(k,0), \quad (5)$$

where E(k, 0) is the SAD (the difference between original luminance values and DC values at the $k^{th}$ intra prediction) and B(k, 0) is total bits to encode the three DC values.

If $C_i$ is less than the values computed by Equation (4), coding is implemented in the intra-macroblock prediction mode. To conclude, if all macroblocks in a frame are encoded in the intra-macroblock prediction mode using only one set of DC values, the frame can be encoded as an I frame. Meanwhile, it is desirable to have many I frames in video sequences if a user desires to view an arbitrary spot in the course of video sequences or automatically edit videos. In this case, replacement of an H frame with an I frame would be a good solution.

Where not all macroblocks in a frame are encoded in intra-prediction mode, if over the predetermined percentage thereof (for example, 90%) is encoded in the infra-prediction mode, the frame can be encoded as an I frame. By doing so, I frames in a video increase and, as a result, it is easier for user to view an arbitrary spot in the video or to edit the video.

Although the STAR algorithm provides simple methods for implementing multi-mode temporal prediction, it should be note that other methods used by MC-EZBC and other codecs can also be used. All macroblocks in all the remaining frames except for the first frame can be encoded in any type among four types described above: forward prediction, backward prediction, bi-directional prediction and intra-macroblock prediction. Those who have ordinary knowledge in the art to which the present invention pertains can appreciate that "H frame" of the figure described above in the STAR algorithm refers to a mixed form of inter-predicted and intra-predicted macroblocks. Moreover, it can be known that the frame located in the H frame is changed to an I frame and then encoded. This kind of flexibility is very useful in fast changed video sequences and fade-in/fade-out frames.

FIG. 14 illustrates possible connections between frames at four predications modes in temporal filtering according to another exemplary embodiment of the present invention.

In FIG. 14, "I+H" means that the frame comprises both intra-predicted macroblocks and inter-predicted macroblocks, and "I" means that the entire frame are encoded by themselves without inter-prediction. Although the intra-prediction can be used in the start frame of the GOP (at the highest temporal level), but it is not used in FIG. 14 because it is not as efficient as much as the wavelet transformation of original frames.

FIGs. 15a and 15b illustrates examples of video coding in fast-changed video sequence and slow or little-changed video sequence with multiple modes, wherein "percent" indicates the rate of prediction mode. Namely, I indicates the rate of intra-prediction blocks in a frame (but the first frame of GOP does not use intra-prediction), BI indicates the rate of bi-direction prediction, F indicates the rate of forward-prediction and B indicates the rate of backward prediction.

Referring to FIG. 15a, since the frame of index 1 is very similar to that of index 0, the percent of F constitutes the overwhelmingly majority, 75%, and BI constitutes the overwhelmingly majority, 87%, in the frame of index 2 because it is close to the intermediate degree of the frames of indexes 0 and 4 (that is, an image to bright the frame of index 0). Since the frame of index 4 is different from other frames, encoded I blocks are with 100%. But encoded B blocks are 94% in the frame of index 6, since the frame of index 4 is very different from that of index 6 but similar to that of index 6.

Referring to FIG. 15b, all the frames seem to be generally similar, among which BI actually shows the best performance in very similar frames. Thus, the ratio of BI is generally the highest in FIG. 5b.

Several simulations to ascertain performance of the STAR algorithm are implemented, wherein the STAR algorithm is applied to the temporal filtering process. For motion estimation, a variant of well-known diamond fast search with multi-mode partitions from the subblock sizes of from 4 by 4 to 16 by 16 is used. For performance comparison, MC-EZBC is used, and EZBC algorithm is also used in implementing an embedded quantization of the present invention.

The first 64 frames of Foreman and Mobile CIF sequences are used as test materials. A concern in the present invention is to improve temporal transmission. For this reason, a test for spatial scalability is not conducted. Both materials are encoded at sufficient bit-rates, and bit-streams thereof are truncated to have bit-rates of 2048 kbps, 1024 kbps, 512 kbps, 256 kbps and 128 kbps for transmission and are then decoded.

For performance measure, PSNR having a weighted value is used. The weighted PSNR is defined as in Equation (6).

$$PSNR=(4PSNR_Y+PSNR_U+PSNR_V)/6 \quad (6)$$

For testing the STAR algorithm, all features described above are included, except the multiple reference frames for simplicity's sake. Last, constant bit-rate allocation based on the GOP level is used for the STAR algorithm whereas variable bit-rate allocation is used for the MC-EZBC algorithm. The variable bit-rate allocation may show better performance if it is applied to the STAR algorithm.

FIGs. 16 and 17 are graphs showing PSNR (peak signal to noise ratio) results for a Foreman CIF sequence and a Mobile CIF sequence in video coding scheme.

A frame rate of 30 Hz is used for 2048 kbps and 1024 kbps. A frame rate of 15 Hz of is used for 512 kbps and 256 kbps. A frame rate of 7.5 Hz is used for 128 kbps. For the STAR algorithm, both bi-directional prediction and cross-GOP optimization are used, wherein GOP sizes of 16 and quarter-pixel motion accuracy are used for both encoders. In addition, the MCTF algorithm employing bi-directional prediction is used in the codec implemented for the STAR algorithm while all the other parts are not changed for comparing only temporal decomposition efficiency without considering performances of other parts. This is marked as MCTF in the figures. These figures show that the performance of the STAR algorithm increases by 1 dB in a Foreman CIF sequence in comparison with MC-EZBC and MCTF schemes. The performance of MCTF is almost similar to that of MC-EZBC. However, the STAR algorithm is almost identical in performance to MC-EZBC in a Mobile sequence, but it shows a better performance than MCTF. It can be thought that the other important coding techniques used in MC-EZBC, such as variable bit-allocation and variable-size block matching technique, make difference, and if both of them are applied to the STAR algorithm, better results than MC-EZBC would be expected. The STAR algorithm clearly outperforms MCTF by up to 3.5 dB, from which it is evidenced that the STAR algorithm is superior to MCTF. It is possible to conclude that the STAR algorithm is clearly superior to MCTF and is compatible to an MC-EZBC coder in an aspect of temporal decomposition efficiency.

For comparing the performance of the low delay coding mode, several experiments for various end-to-end delay settings are conducted. For the STAR algorithm, the delay control parameter D is changed from 0 to 8, which correspond to end-to-end delays of 67 ms to 567 ms corresponding to GOP sizes of 2 to 16. However, to measure various end-to-end delay conditions, bit-rates form 2048 kbps to 256 kbps are used but the spatial scalability is not used. Intra-macroblock prediction mode is also not used so as to compare only the difference between temporal decomposition structures.

FIG. 18 shows PSNR drops compared with maximum delay setting of 567 ms for a Foreman CIF sequence varying end-to-end delay conditions. As shown in FIG. 18, PSNR values decrease significantly in MC-EZBC with reduced GOP size. Especially, the performance in the case of a GOP size of 2 is significantly lower than other GOP sizes. Even with the GOP size of 4, the end-to-end delay is over 150 ms. To the contrary, the PNSR drop is not severe in the STAR algorithm. Even in the shortest end-to-end delay (67 ms), the PSNR drop is only about 1.3 dB and the PSNR drop in the acceptable low delay mode (100 ms) is only 0.8 dB. The maximum difference in reduction of the maximum PSNR values between the two algorithms is up to 3.6 dB.

FIG. 19 shows PSNR drops compared with the maximum delay setting for Mobile CIF sequence. In FIG. 19, PSNR drops of MC-EZBC are more severe than the case of a Foreman CIF sequence as already described. For the STAR algorithm, PSNR drops between the maximum and the minimum end-to-end delays are about up to 2.3 dB and about up to 6.9 dB in the MC-EZBC coder. The PSNR drop with end-to-end delay of 100 ms is only 1.7 dB and that of MC-EZBC is up to 6.9 dB. The maximum difference of PSNR drops between two algorithms with the end-to-end delay of 100 ms is up to 5.1 dB. Furthermore, the STAR algorithm supports full temporal scalability even with the shortest delay setting while the conventional method supports only one-level temporal scalability with a GOP size of 2. Differences between PSNR values are described in Table 2.

| **Foreman CIF at 30 Hz** | | | | | |
|---|---|---|---|---|---|
| MC-EZBC | | | | | |
| Bit-rates/ Delay | 67 ms | 100 ms | 167 ms | 300 ms | 567 ms |
| 256 | | 31.66 | 33.43 | 34.61 | 35.19 |
| 512 | | 34.75 | 36.68 | 37.73 | 38.09 |
| 1024 | | 37.88 | 39.77 | 40.59 | 40.80 |
| 2048 | | 41.62 | 43.12 | 43.64 | 43.72 |
| STAR | | | | | |
| 256 | 34.97 | 35.23 | 35.43 | 35.67 | 35.94 |
| 512 | 37.80 | 38.23 | 38.55 | 38.82 | 39.06 |
| 1024 | 40.36 | 40.89 | 41.22 | 41.45 | 41.63 |
| 2048 | 43.02 | 43.57 | 43.86 | 44.04 | 44.14 |

| **Mobile CIF at 30 Hz** | | | | | |
|---|---|---|---|---|---|
| MC-EZBC | | | | | |
| Bit-rates /Delay | 67 ms | 100 ms | 167 ms | 300 ms | 567 ms |
| 256 | | 22.21 | 23.39 | 24.64 | 26.08 |
| 512 | | 24.08 | 25.99 | 28.33 | 30.28 |
| 1024 | | 26.80 | 29.51 | 32.20 | 33.70 |
| 2048 | | 30.58 | 33.93 | 36.10 | 36.98 |
| STAR | | | | | |
| 256 | 25.61 | 25.66 | 25.80 | 26.15 | 26.72 |
| 512 | 28.42 | 28.70 | 29.03 | 29.62 | 30.27 |
| 1024 | 31.46 | 31.94 | 32.44 | 33.16 | 33.68 |
| 2048 | 34.96 | 35.63 | 36.23 | 36.89 | 37.27 |

Comparison between fast changed video sequences will be described with reference to FIG. 20.

FIG. 20 is a graph showing PSNR results when a part of a fast-changed scene from the movie "Matrix 2" is encoded by use of four prediction modes and is encoded not by use of the four prediction modes.

For an experiment, only one GOP of 16 frames is used. A selected frame includes very fast motion, scene change, blank frames, and fade-in/fade-out. The STAR algorithm is applied to cases with intra-macroblock prediction and without intra-macroblock prediction, and the result of MC-EZBC is included for comparison. For testing the adaptive GOP size feature, both results when "adapt_flag" in MC-EZBC configuration field is turned on and off are included.

As shown in FIG. 20, the effect of intra-prediction is very excellent. The PSNR difference is over 5B between the STAR algorithms with and without intra-prediction feature and over 10 dB between MC-EZBC with and without adaptive GOP size feature. In addition, the performance of the STAR algorithm with intra-macroblock prediction outperforms MC-EZBC with the adaptive GOP size feature by a clear margin by over 1.5 dB mainly due to more flexible macroblock-based intra-prediction method.

According to the present invention, it is possible to control end-to-end delay and perform video coding causing degradation of performance not severe in short end-to-end delay. In addition, fast changed video sequences can be efficiently compressed. Further, delay control does not affect to temporal scalability of the video sequences.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A method for video coding, the method comprising:

(a) eliminating a temporal redundancy in a constrained temporal level sequence from a plurality of frames of a video sequence; and

(b) generating a bit-stream by quantizing transformation coefficients obtained from the frames whose temporal redundancy has been eliminated.

**2.** The method as claimed in claim 1, wherein the frames in step (a) are frames whose spatial redundancy has been eliminated after being subjected to a wavelet transformation.

**3.** The method as claimed in claim 1 or claim 2, wherein the transformation coefficients in step (b) are obtained by performing a spatial transformation of frames whose temporal redundancy has been eliminated.

**4.** The method as claimed in claim 3, wherein the spatial transformation is performed based upon a wavelet transformation.

**5.** The method as claimed in any preceding claim, wherein temporal levels of the frames have dyadic hierarchal structures.

**6.** The method as claimed in any preceding claim, wherein the constrained temporal level sequence is a sequence of the frames from a highest temporal level to a lowest temporal level and a sequence of the frames from a lowest frame index to a highest frame index in a same temporal level.

**7.** The method as claimed in claim 6, wherein the constrained temporal level sequence is periodically repeated on a Group of Pictures (GOP) basis.

**8.** The method as claimed in claim 7, wherein a frame at the highest temporal level has the lowest frame index of a GOP among frames constituting the GOP.

**9.** The method as claimed in claim 8, wherein in step (a), elimination of temporal redundancy is performed on the GOP basis, a first frame at the highest temporal level in the GOP is encoded as an I frame and then temporal redundancy from respective remaining frames is eliminated according to the constrained temporal level sequence, and elimination of the temporal redundancy from a remaining frame is performed based on at least one reference frame at a temporal level higher than a temporal level of the remaining frame or at least one reference frame having a frame index which is lower than a frame index of the remaining frame, among the frames at a temporal level equivalent to the temporal level of the remaining frame.

**10.** The method as claimed in claim 9, wherein the reference frame comprises a frame whose frame index difference is a minimum among frames having temporal levels higher than the remaining frame.

**11.** The method as claimed in claim 9 or claim 10, wherein the elimination of the temporal redundancy from the remaining frame is performed based on the remaining frame.

**12.** The method as claimed in claim 11, wherein the frames are encoded as I frames where a ratio that the frames refer to themselves in the elimination of the temporal redundancy is greater than a predetermined value.

**13.** The method as claimed in any one of claims 9 to 12, wherein the elimination of the temporal redundancy from the remaining frame is performed based on at least one frame of a next GOP, whose temporal level is higher than temporal levels of each of the frames currently being processed in step (a).

**14.** The method as claimed in any preceding claim, wherein the constrained temporal level sequence is determined based on a coding mode.

**15.** The method as claimed in claim 14, wherein the constrained temporal level sequence which is determined based on the coding mode is periodically repeated on a Group of Pictures (GOP) basis in a same coding mode.

**16.** The method as claimed in claim 15, wherein a frame at a highest temporal level, among the frames constituting the GOP, has a lowest frame index.

**17.** The method as claimed in claim 16, wherein in step (b), information regarding the coding mode is added to the bit-stream.

**18.** The method as claimed in claim 16 or claim 17, wherein in step (b), information regarding the sequences of spatial elimination and temporal elimination is added to the bit-stream.

**19.** The method as claimed in any one of claims 15 to 18, wherein the coding mode is determined depending upon an end-to-end delay parameter D, where the constrained temporal level sequence progresses from the frames at a highest temporal level to a lowest temporal level among the frames having frame indexes not exceeding D in comparison to a frame at the lowest temporal level, which has not yet had the temporal redundancy removed, and from the frames at a lowest frame index to a highest frame index in a same temporal level.

**20.** The method as claimed in claim 19, wherein in step (a) elimination of the temporal redundancy is performed on the GOP basis, a first frame at the highest temporal level in the GOP is encoded as an I frame and then temporal redundancy from respective remaining frames is eliminated according to the constrained temporal level sequence, and elimination of the temporal redundancy from a remaining frame is performed based on at least one reference frame at a temporal level higher than a temporal level of the remaining frame or at least one reference frame having a frame index which is lower than a frame index of the remaining frame, among the frames at a temporal level equivalent to the temporal level of the remaining frame.

**21.** The method as claimed in claim 20, wherein the reference frame comprises a frame whose frame index difference is a minimum among frames at temporal levels higher than the temporal level of the remaining frame.

**22.** The method as claimed in claim 20 or claim 21, wherein a frame at the highest temporal level within the GOP has the lowest frame index.

**23.** The method as claimed in any one of claims 20 to 22, wherein the elimination of the temporal redundancy from the remaining frame is performed based on the remaining frame.

**24.** The method as claimed in claim 23, wherein the frames are encoded as I frames where a ratio that the frames refer to themselves in the elimination of the temporal redundancy is greater than a predetermined value.

**25.** The method as claimed in any one of claims 20 to 24, wherein the elimination of the temporal redundancy from the remaining frame is performed based on at least one frame of a next GOP, whose temporal level is higher than a temporal level of each of the frames currently being processed in step (a) and whose temporal distances from each of the frames currently being processed in step

(a) are less than or equal to D.

**26.** A video encoder comprising:

a temporal transformation unit (10) eliminating a temporal redundancy in a constrained temporal level sequence from a plurality of frames of an input video sequence;

a spatial transformation unit (20) eliminating a spatial redundancy from the frames;

a quantization unit (30) quantizing transformation coefficients obtained from eliminating the temporal redundancies in the temporal transformation unit (10) and the spatial redundancies in the spatial transformation unit (20); and

a bit-stream generation unit (40) generating a bit-stream based on quantized transformation coefficients generated by the quantization unit (30).

**27.** The video encoder as claimed in claim 26, wherein the temporal transformation unit (10) eliminates the temporal redundancy of the frames and transmits the frames whose temporal redundancy has been eliminated to the spatial transformation unit (20), and the spatial transformation unit (20) eliminates the spatial redundancy of the frames whose temporal redundancy has been eliminated to generate the transformation coefficients.

**28.** The video encoder as claimed in claim 27, wherein the spatial transformation unit (20) eliminates the spatial redundancy of the frames through a wavelet transformation.

**29.** The video encoder as claimed in any one of claims 26 to 28, wherein the spatial transformation encoder eliminates the spatial redundancy of the frames through the wavelet transformation and transmits the frames whose spatial redundancy has been eliminated to the temporal transformation unit (10), and the temporal transformation unit (10) eliminates the temporal redundancy of the frames whose spatial redundancy has been eliminated to generate the transformation coefficients.

**30.** The video encoder as claimed in any one of claims 26 to 29, wherein the temporal transformation unit (10) comprises:

a motion estimation unit (12) obtaining motion vectors from the frames ;

a temporal filtering unit (14) temporally filtering in the constrained temporal level sequence the frames based on the motion vectors obtained by the motion estimation unit (12); and

a mode selection unit (16) determining the constrained temporal level sequence.

**31.** The video encoder as claimed in claim 30, wherein the constrained temporal level sequence which is determined by the mode selection unit (16) is based on a periodical function of a Group of Pictures (GOP).

**32.** The video encoder as claimed in claim 30 or claim 31, wherein the mode selection unit (16) determines the constrained temporal level sequence of the frames from a highest temporal level to a lowest temporal level, and from a lowest frame index to a highest frame index in a same temporal level.

**33.** The video encoder as claimed in claim 32, wherein the constrained temporal level sequence determined by the mode selection unit (16) is periodically repeated on a Group of Pictures (GOP) basis.

**34.** The video encoder as claimed in any one of claims 30 to 33, wherein the mode selection unit (16) determines the constrained temporal level sequence based on a delay control parameter D, where a determined temporal level sequence is a sequence of frames from a highest temporal level to a lowest temporal level among the frames of indexes not exceeding D in comparison to a frame at the lowest level, whose temporal redundancy is not eliminated, and a sequence of the frames from a lowest frame index to a highest frame index in a same temporal level.

**35.** The video encoder as claimed in claim 34, wherein the temporal filtering unit (14) eliminates the temporal redundancy on a Group of Pictures (GOP) basis according to the constrained temporal level sequence determined by the mode selection unit (16), where the frame at the highest temporal level within the GOP is encoded as an I frame, and then temporal redundancy from respective remaining frames is eliminated, and elimination of the temporal redundancy from a remaining frame is performed based on at least one reference frame at a temporal level higher than a temporal level of the remaining frame or at least one reference frame having a frame index which is lower than a frame index of the remaining frame, among the frames at a temporal level equivalent to the temporal level of the remaining frame.

**36.** The video encoder as claimed in claim 35, wherein the reference frame comprises a frame whose frame index difference is a minimum among frames at temporal levels higher than the temporal level of the remaining frame.

**37.** The video encoder as claimed in claim 35 or claim 36, wherein a frame at the highest temporal level within the GOP has the lowest temporal frame index.

**38.** The video encoder as claimed in any one of claims 35 to 37, wherein the elimination of the temporal redundancy from the remaining frame is performed based on the remaining frame.

**39.** The video encoder as claimed in claim 38, wherein the temporal filtering unit (14) encodes a currently filtered frame as an I frame where a ratio that the currently filtered frame refers to itself is greater than a predetermined value.

**40.** The video encoder as claimed in any one of claims 26 to 39, wherein the bit-stream generation unit (40) generates the bit-stream including information on the constrained temporal level sequence.

**41.** The video encoder as claimed in any one of claims 26 to 40, wherein the bit-stream generation unit (40) generates the bit-stream including information regarding sequences of eliminating temporal and spatial redundancies to obtain the transformation coefficients.

**42.** A video decoding method comprising:

(a) extracting information regarding encoded frames by receiving and interpreting a bit-stream;

(b) obtaining transformation coefficients by inverse-quantizing the information regarding the encoded frames; and

(c) restoring the encoded frames through an inverse-temporal transformation of the transformation coefficients in a constrained temporal level sequence.

**43.** The method as claimed in claim 42, wherein in step (c), the encoded frames are restored by performing the inverse-temporal transformation on the transformation coefficients and performing an inverse-wavelet transformation on the transformation coefficients which have been inverse-temporal transformed.

**44.** The method as claimed in claim 42 or claim 43, wherein in step (c) the encoded frames are restored by performing an inverse-spatial transformation of the transformation coefficients, and performing the inverse-temporal transformation on the transformation coefficients which have been inverse-spatial transformed.

**45.** The method as claimed in claim 44, wherein the inverse-spatial transformation employs an inverse-wavelet transformation.

**46.** The method as claimed in any one of claims 42 to 45, wherein the constrained temporal level sequence is a sequence of the encoded frames from a highest temporal level to a lowest temporal level, and a sequence of the encoded frames from a highest frame index to a lowest frame index in a same temporal level.

**47.** The method as claimed in claim 46, wherein the constrained temporal level sequence is periodically repeated on a Group of Pictures (GOP) basis.

**48.** The method as claimed in claim 47, wherein the inverse-temporal transformation comprises inverse temporal filtering of the encoded frames, starting from the encoded frames at the highest temporal level and processing according to the constrained temporal level sequence, within a GOP.

**49.** The method as claimed in any one of claims 42 to 48, wherein the constrained temporal level sequence is determined according to coding mode information extracted from the bit-stream input.

**50.** The method as claimed in claim 49, wherein the constrained temporal level sequence is periodically repeated on a Group of Pictures (GOP) basis in a same coding mode.

**51.** The method as claimed in claim 49 or claim 50, wherein the coding mode information determining the constrained temporal level sequence comprises an end-to-end delay control parameter D, where the constrained temporal level sequence determined by the coding mode information progresses from the encoded frames at a highest temporal level to a lowest temporal level among the encoded frames having frame indexes not exceeding D in comparison to an encoded frame at the lowest temporal level, which has not yet been decoded, and from the encoded frames at a lowest frame index to a highest index in a same temporal level.

**52.** The method as claimed in any one of claims 42 to 51, wherein the redundancy elimination sequence is extracted from the bit-stream.

**53.** A video decoder for restoring frames from a bit-stream, the decoder comprising:

a bit-stream interpretation unit (100) interpreting a bit-stream to extract information regarding encoded frames therefrom;

an inverse-quantization unit (210) inverse-quantizing the information regarding the encoded frames to obtain transformation coefficients therefrom;

an inverse spatial transformation unit (220) performing an inverse-spatial transformation process; and

an inverse temporal transformation unit (230) performing an inverse-temporal transformation process in a constrained temporal level sequence,

wherein the encoded frames of the bit-stream are restored by performing the inverse-spatial process and the inverse-temporal transformation process on the transformation coefficients.

**54.** The video decoder as claimed in claim 53, wherein the inverse spatial transformation unit (220) performs an inverse-wavelet transformation on the transformation coefficients which have been inverse-temporal transformed by the inverse temporal transformation unit (230).

**55.** The video decoder as claimed in claim 53 or claim 54, wherein the inverse spatial transformation unit (220) performs the inverse-spatial transformation process on the transformation coefficients, and the inverse temporal transformation unit (230) performs the inverse-temporal transformation process on the transformation coefficients which have been inverse-spatial transformed by the inverse spatial transformation unit (220).

**56.** The video decoder as claimed in claim 55, wherein the inverse spatial transformation unit (220) performs the inverse-spatial transformation process based on an inverse-wavelet transformation.

**57.** The video decoder as claimed in any one of claims 53 to 56, wherein the constrained temporal is a sequence of the encoded frames from a highest temporal level to a lowest temporal level, and a sequence of the encoded frames from a highest frame index to a lowest frame index in a same temporal level.

**58.** The video decoder as claimed in claim 57, wherein the constrained temporal level sequence is periodically repeated on a Group of Pictures (GOP) basis.

**59.** The video decoder as claimed in claim 58, wherein the inverse temporal transformation unit (230) performs inverse temporal transformation on the GOP basis, and the encoded frames are inverse-temporally filtered, starting from the frames at the highest temporal level to the frames at the lowest temporal level within a GOP.

**60.** The video decoder as claimed in any one of claims 53 to 59, wherein the bit-stream interpretation unit (100) extracts coding mode information from the bit-stream input and determines the constrained temporal level sequence according to the coding mode information.

**61.** The video decoder as claimed in claim 60, wherein the constrained temporal level sequence is periodically repeated on a Group of Pictures (GOP) basis.

**62.** The video decoder as claimed in claim 60 or claim 61, wherein the coding mode information determining the constrained temporal level sequence comprises an end-to-end delay control parameter D, where the constrained temporal level sequence determined by the coding mode information progresses from the encoded frames at a highest temporal level to a lowest temporal level among the frames having frame indexes not exceeding D in comparison to an encoded frame at the lowest temporal level, which has not yet been decoded, and from the frames at a lowest frame index to a highest frame index in a same temporal level.

**63.** The video decoder as claimed in any one of claims 53 to 62, wherein the redundancy elimination sequence is extracted from the input stream.

**64.** A storage medium recording thereon a program readable by a computer so as to execute a video coding method comprising:

eliminating a temporal redundancy in a constrained temporal level sequence from a plurality of frames of a video sequence; and

generating a bit-stream by quantizing transformation coefficients obtained from the frames whose temporal redundancy has been eliminated.

**65.** A storage medium recording thereon a program readable by a computer so as to execute a video coding method comprising:

extracting information regarding encoded frames by receiving and interpreting a bit-stream;

obtaining transformation coefficients by inverse-quantizing the information regarding the encoded frames; and

restoring the encoded frames through an inverse-temporal transformation of the transformation coefficients in a constrained temporal level sequence.

FIG. 1a

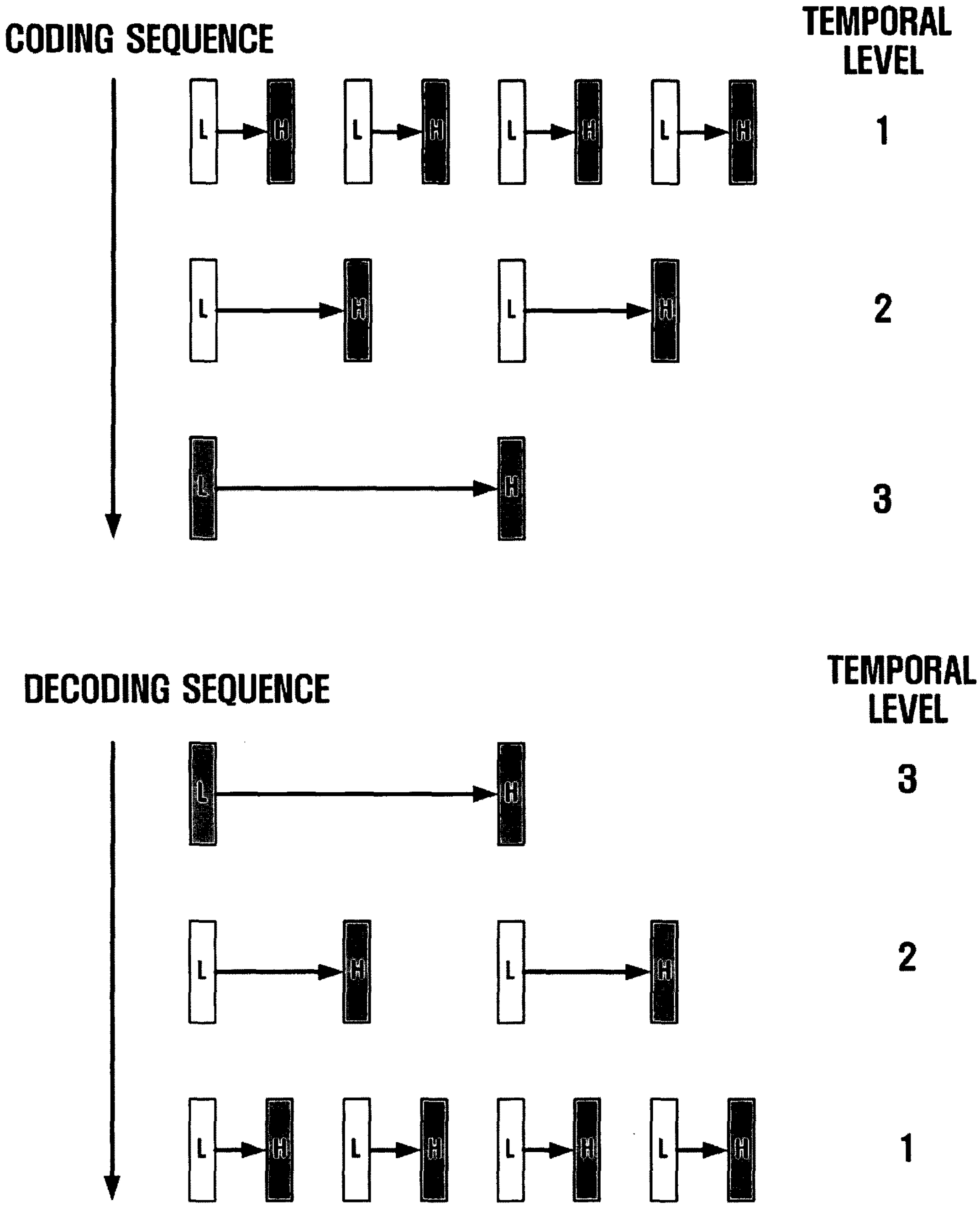
CODING SEQUENCE
TEMPORAL LEVEL
L
H
1
2
3
DECODING SEQUENCE
TEMPORAL LEVEL
3
2
1

FIG. 1b

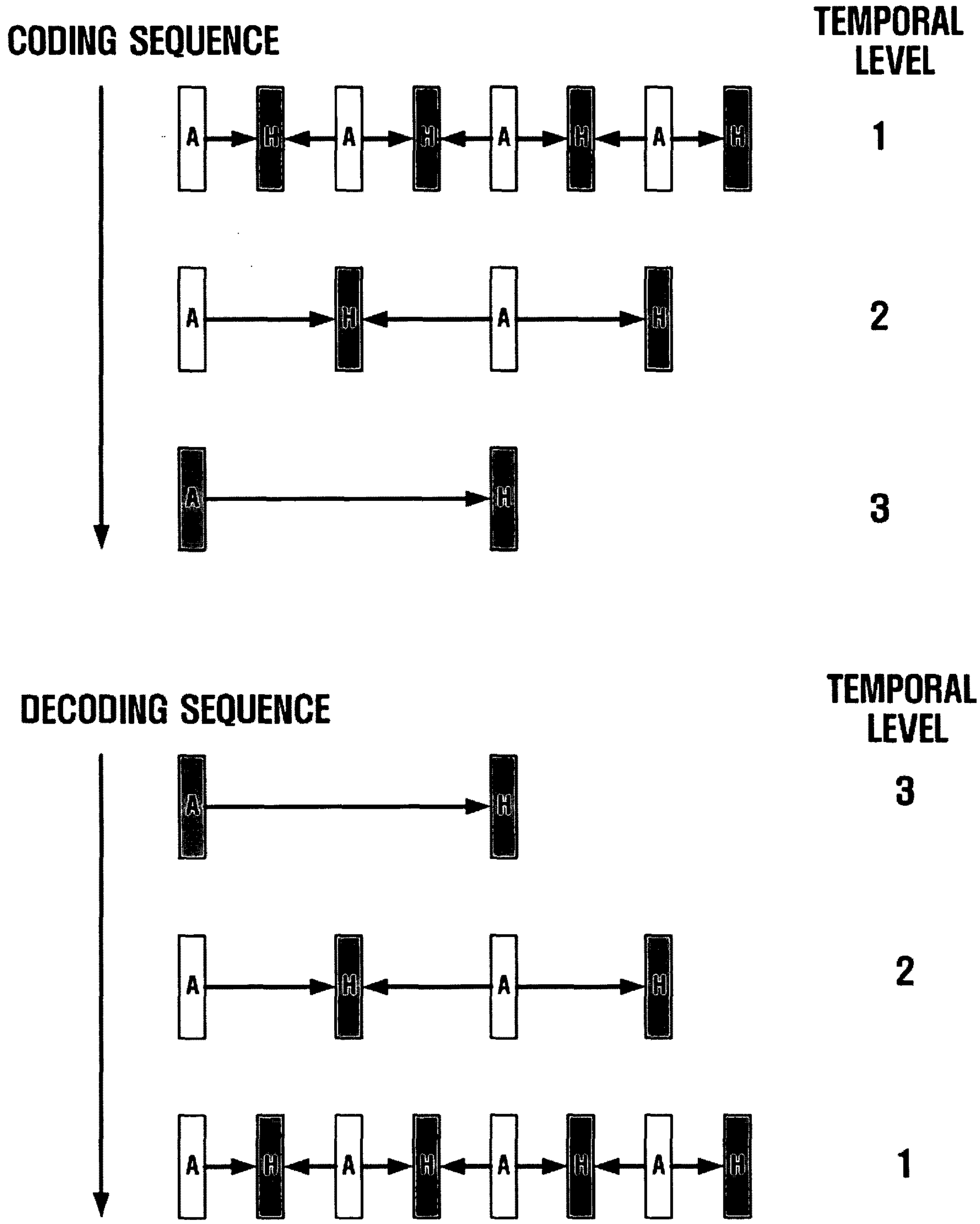
CODING SEQUENCE
TEMPORAL LEVEL
A
H
1
2
3
DECODING SEQUENCE
TEMPORAL LEVEL
3
2
1

FIG. 2

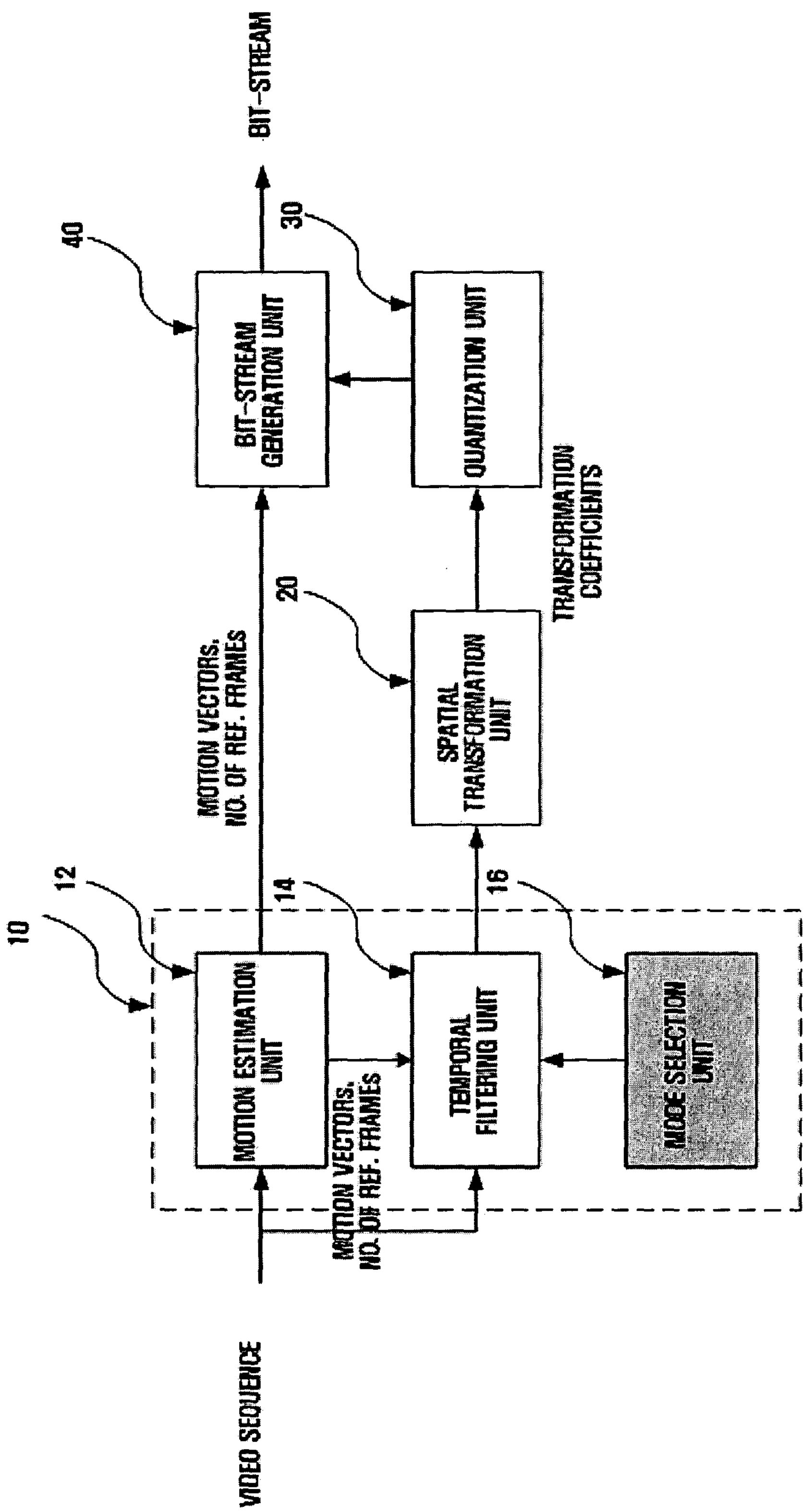
VIDEO SEQUENCE
MOTION VECTORs, NO. OF REF. FRAMES
10
12
MOTION ESTIMATION UNIT
14
TEMPORAL FILTERING UNIT
16
MODE SELECTION UNIT
MOTION VECTORs, NO. OF REF. FRAMES
20
SPATIAL TRANSFORMATION UNIT
TRANSFORMATION COEFFICIENTS
30
QUANTIZATION UNIT
40
BIT-STREAM GENERATION UNIT
BIT-STREAM

FIG. 3

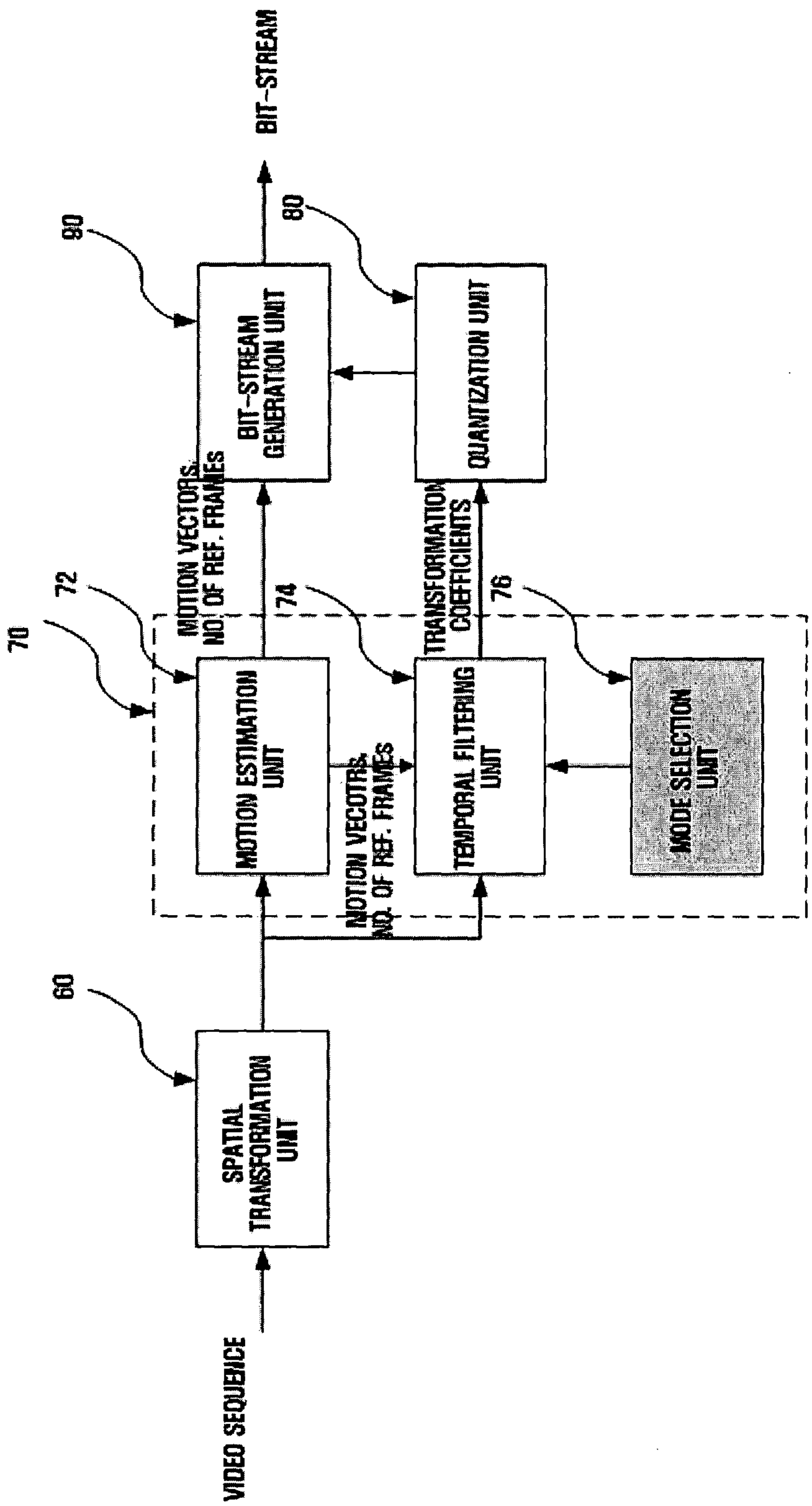
VIDEO SEQUENCE
SPATIAL TRANSFORMATION UNIT
60
70
MOTION ESTIMATION UNIT
72
TEMPORAL FILTERING UNIT
74
MODE SELECTION UNIT
76
MOTION VECOTRs NO. OF REF. FRAMEs
MOTION VECTORs NO. OF REF. FRAMEs
TRANSFORMATION COEFFICIENTS
BIT-STREAM GENERATION UNIT
90
QUANTIZATION UNIT
80
BIT-STREAM

FIG. 4

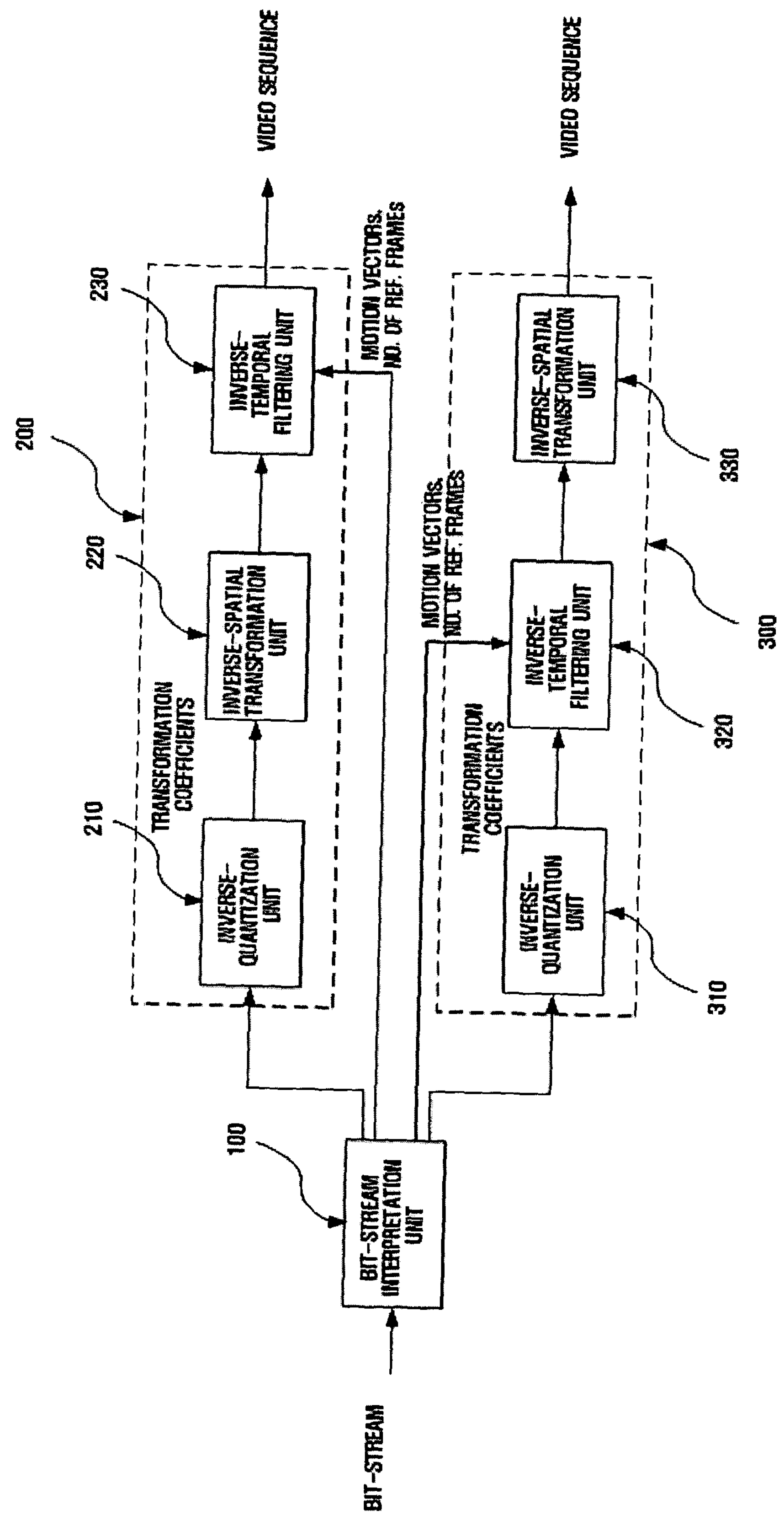

BIT-STREAM
BIT-STREAM INTERPRETATION UNIT
100
200
210
INVERSE-QUANTIZATION UNIT
TRANSFORMATION COEFFICIENTS
220
INVERSE-SPATIAL TRANSFORMATION UNIT
230
INVERSE-TEMPORAL FILTERING UNIT
MOTION VECTORs, NO. OF REF. FRAMES
VIDEO SEQUENCE
300
310
INVERSE-QUANTIZATION UNIT
TRANSFORMATION COEFFICIENTS
320
INVERSE-TEMPORAL FILTERING UNIT
MOTION VECTORs, NO. OF REF. FRAMES
330
INVERSE-SPATIAL TRANSFORMATION UNIT
VIDEO SEQUENCE

# FIG. 5

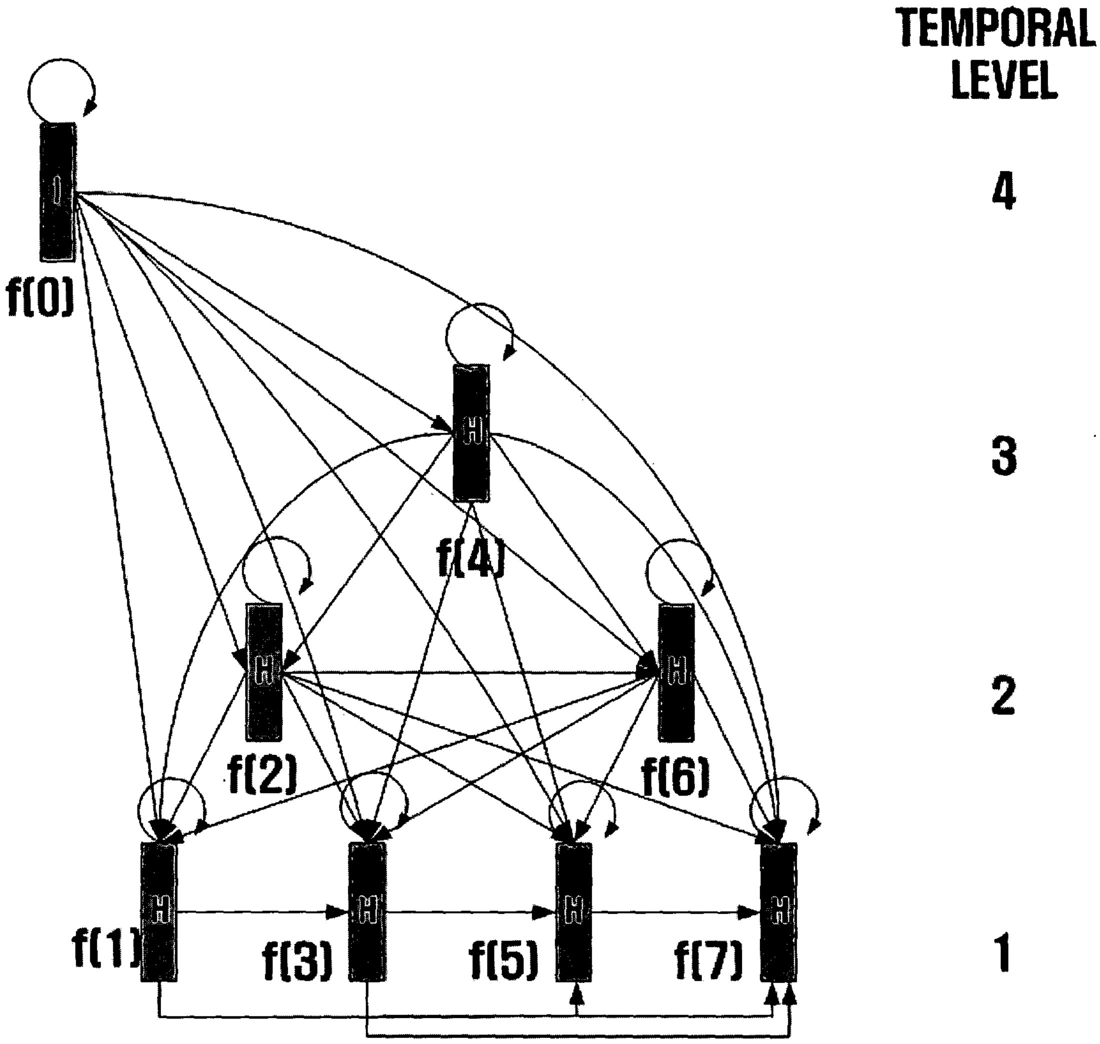

# FIG. 6

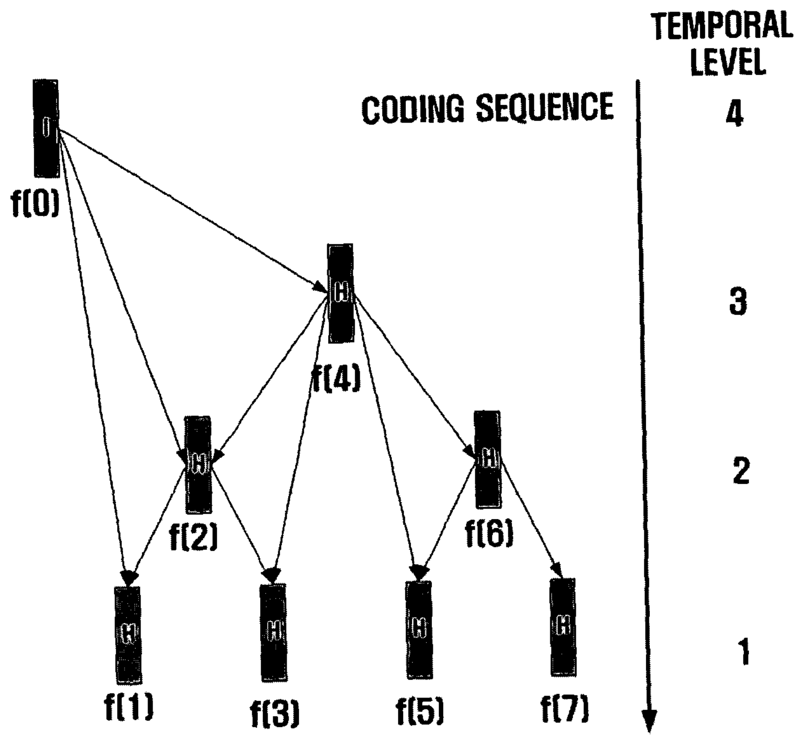
TEMPORAL LEVEL
CODING SEQUENCE
4
3
2
1
f(0)
f(4)
f(2)
f(6)
f(1)
f(3)
f(5)
f(7)

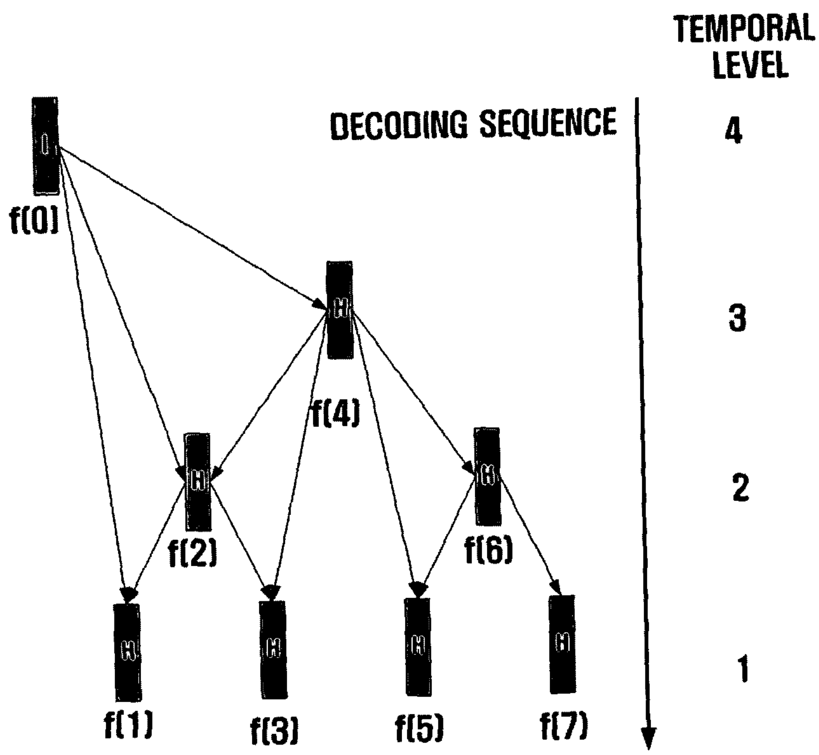
TEMPORAL LEVEL
DECODING SEQUENCE
4
3
2
1
f(0)
f(4)
f(2)
f(6)
f(1)
f(3)
f(5)
f(7)

FIG. 7

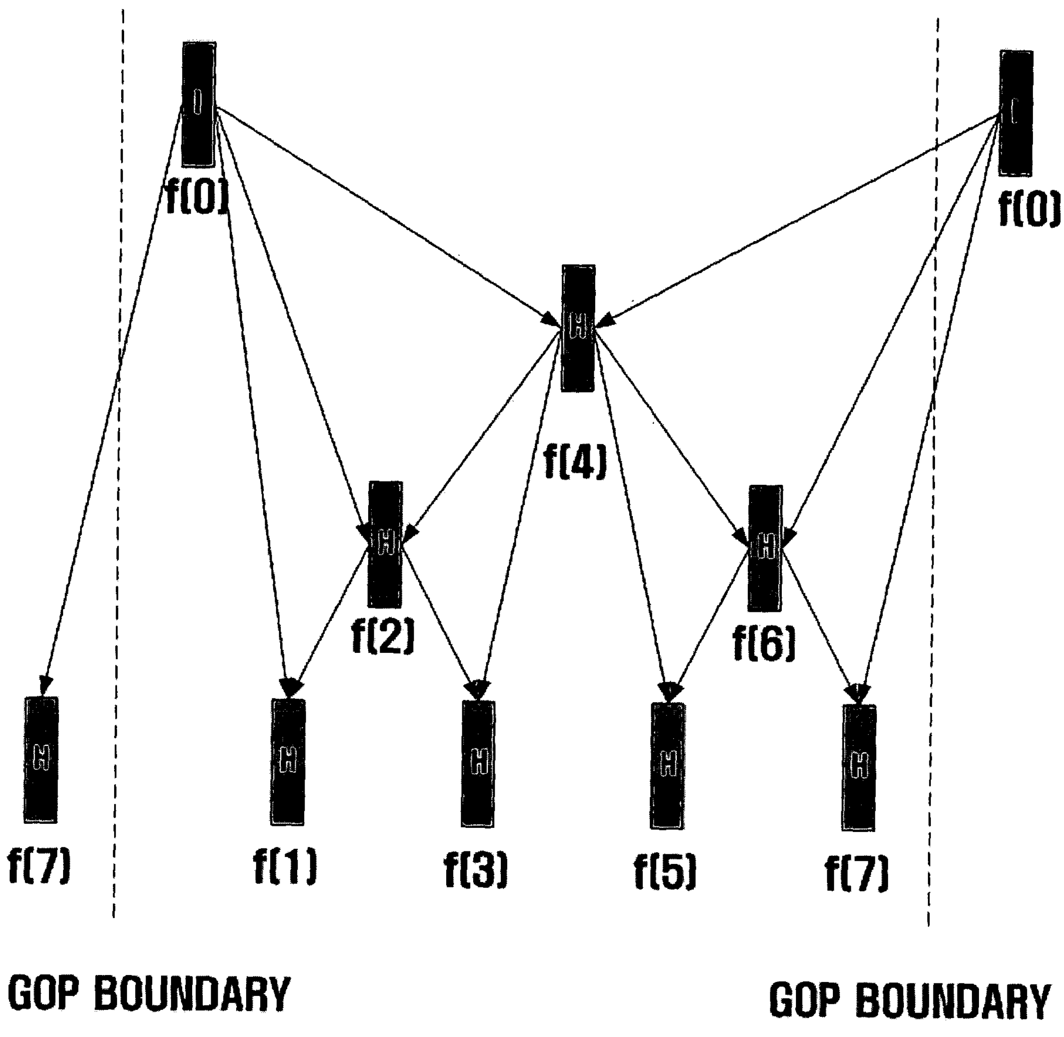

FIG. 8

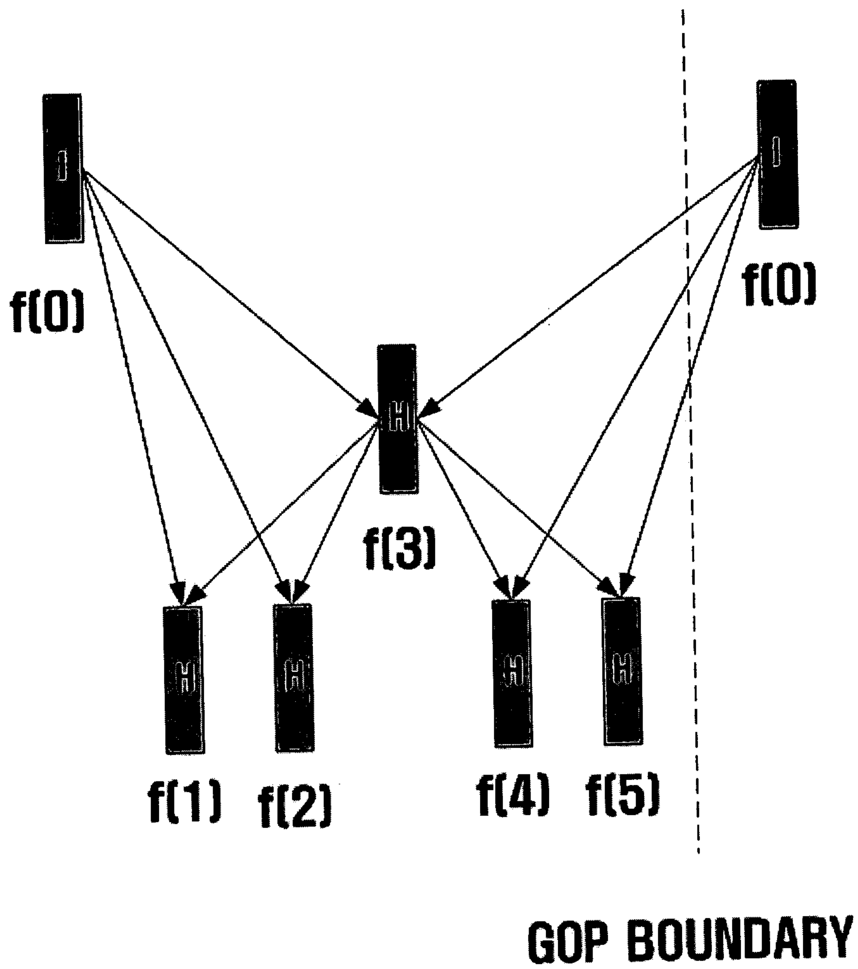

FIG. 9

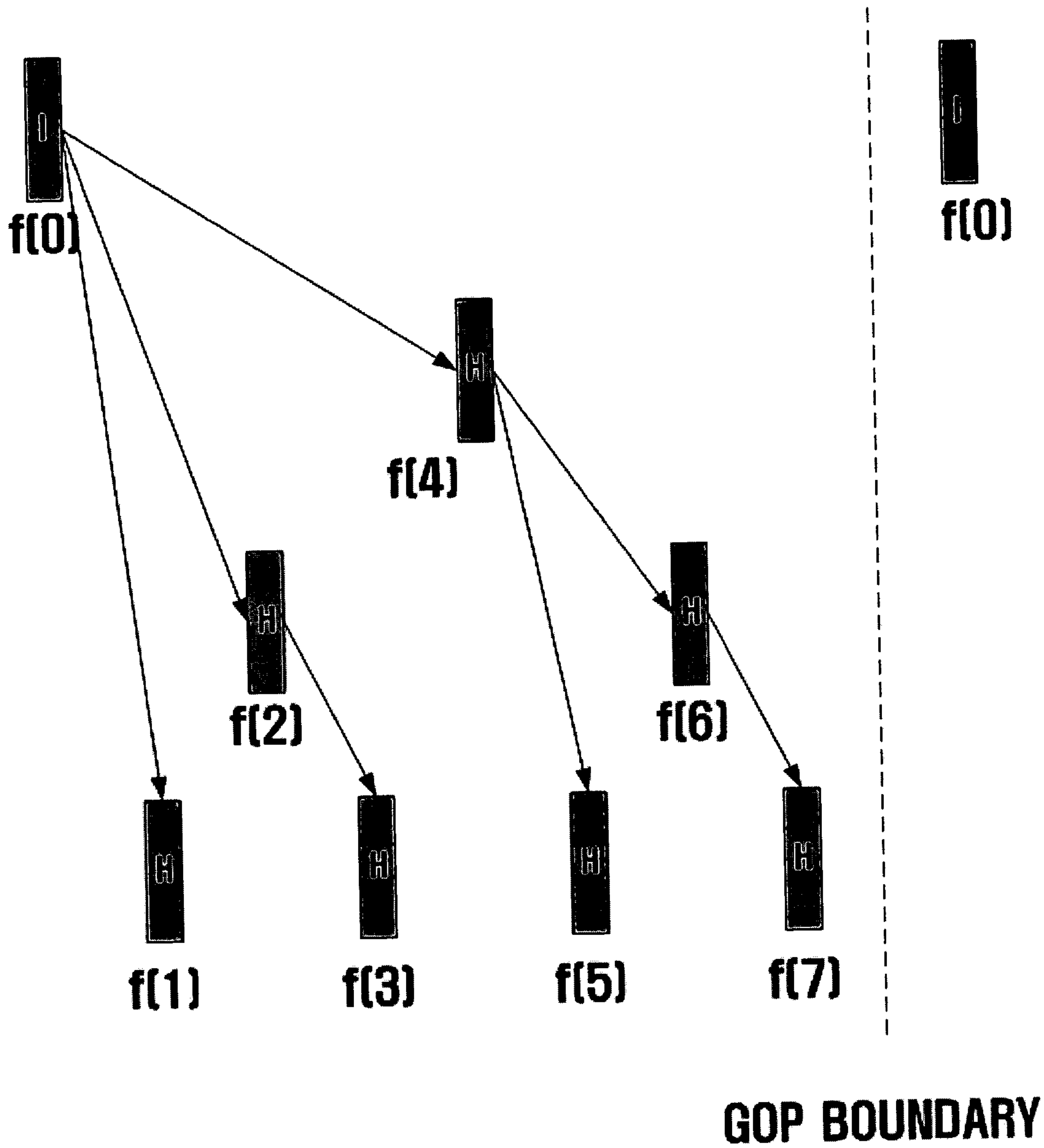

# FIG. 10

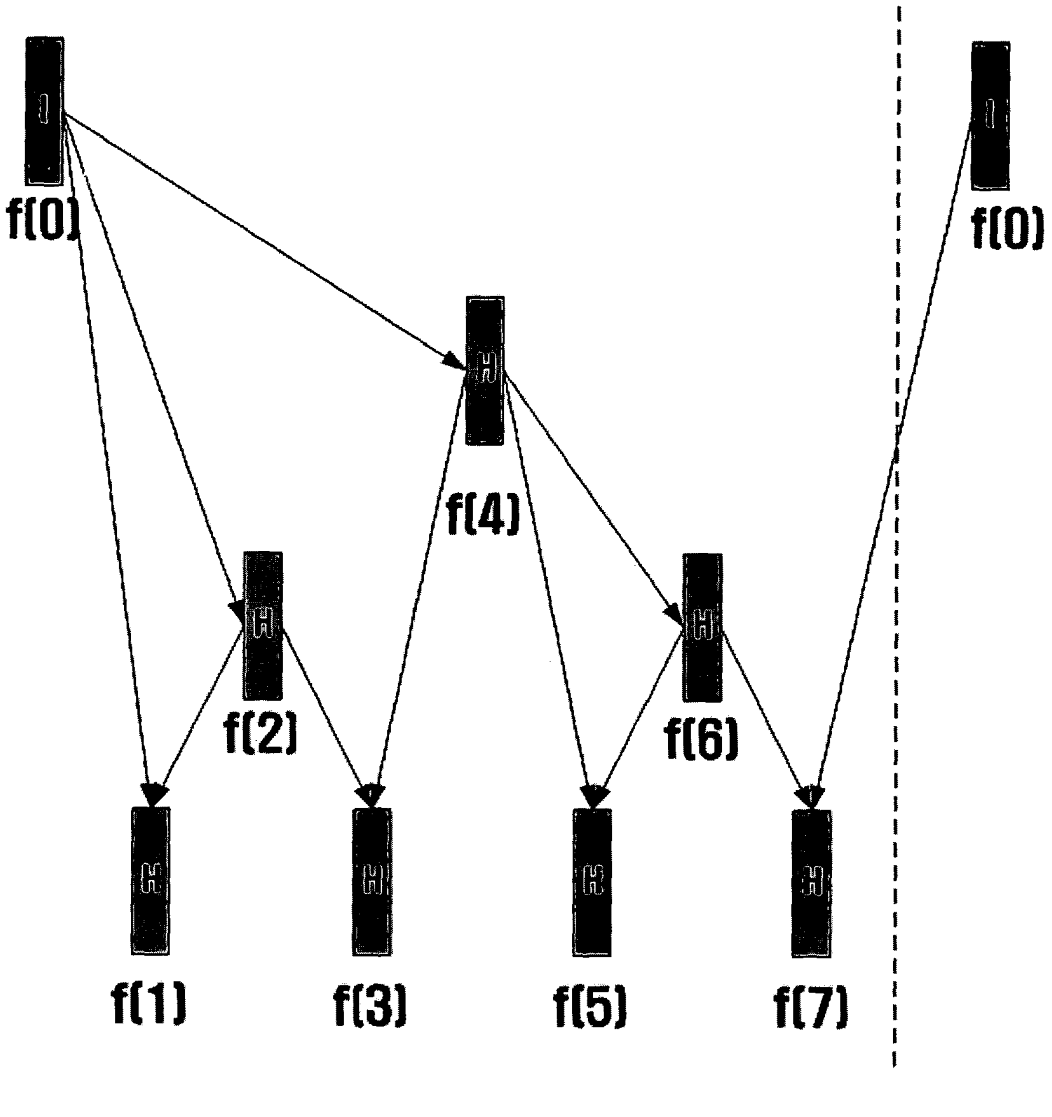

# FIG. 11

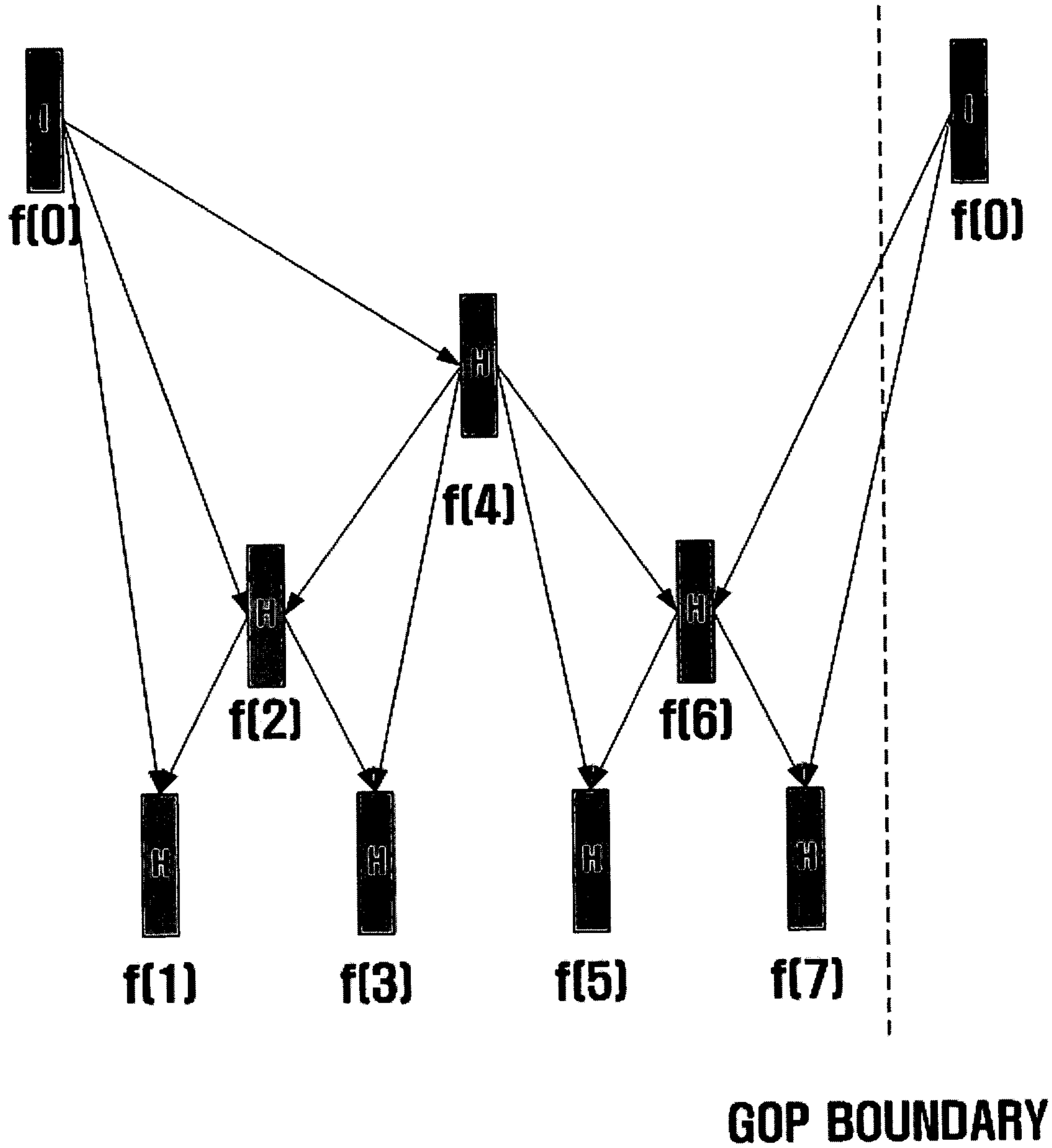

FIG. 12

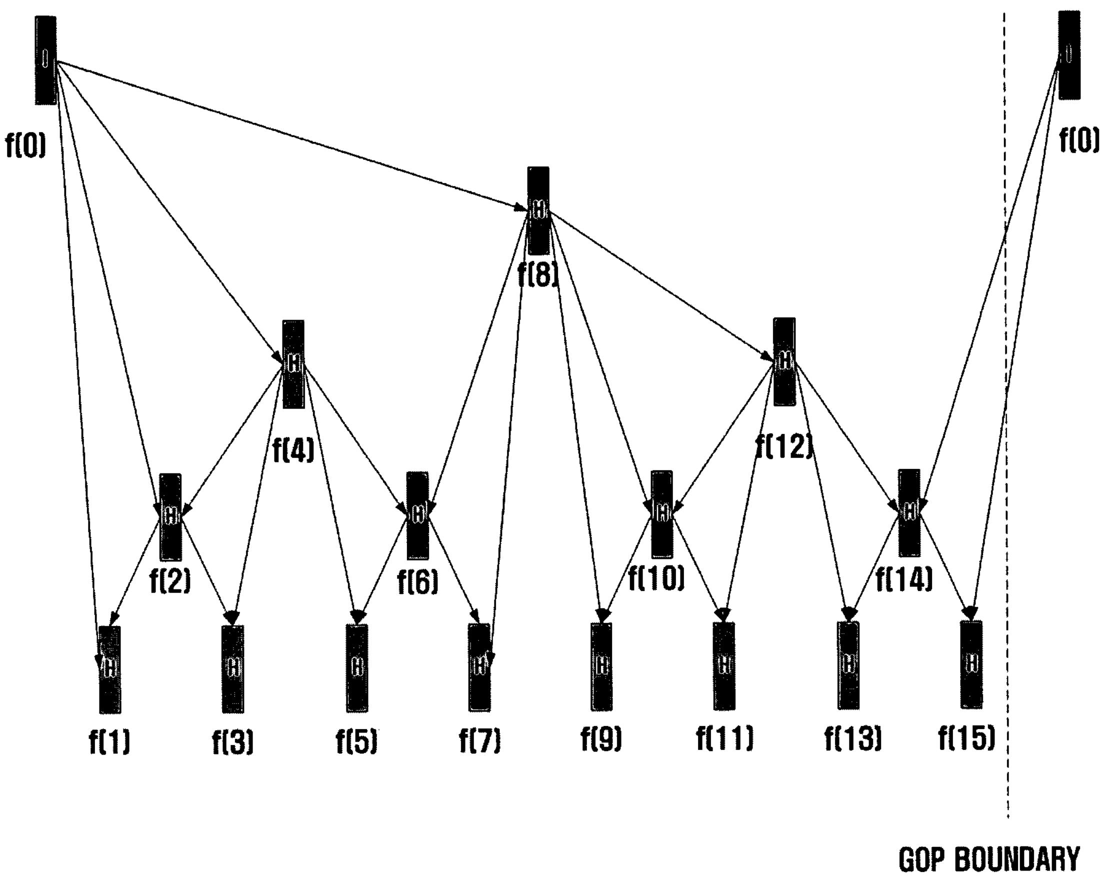
f(0)
f(0)
f(8)
f(4)
f(12)
f(2)
f(6)
f(10)
f(14)
f(1)
f(3)
f(5)
f(7)
f(9)
f(11)
f(13)
f(15)
GOP BOUNDARY

# FIG. 13

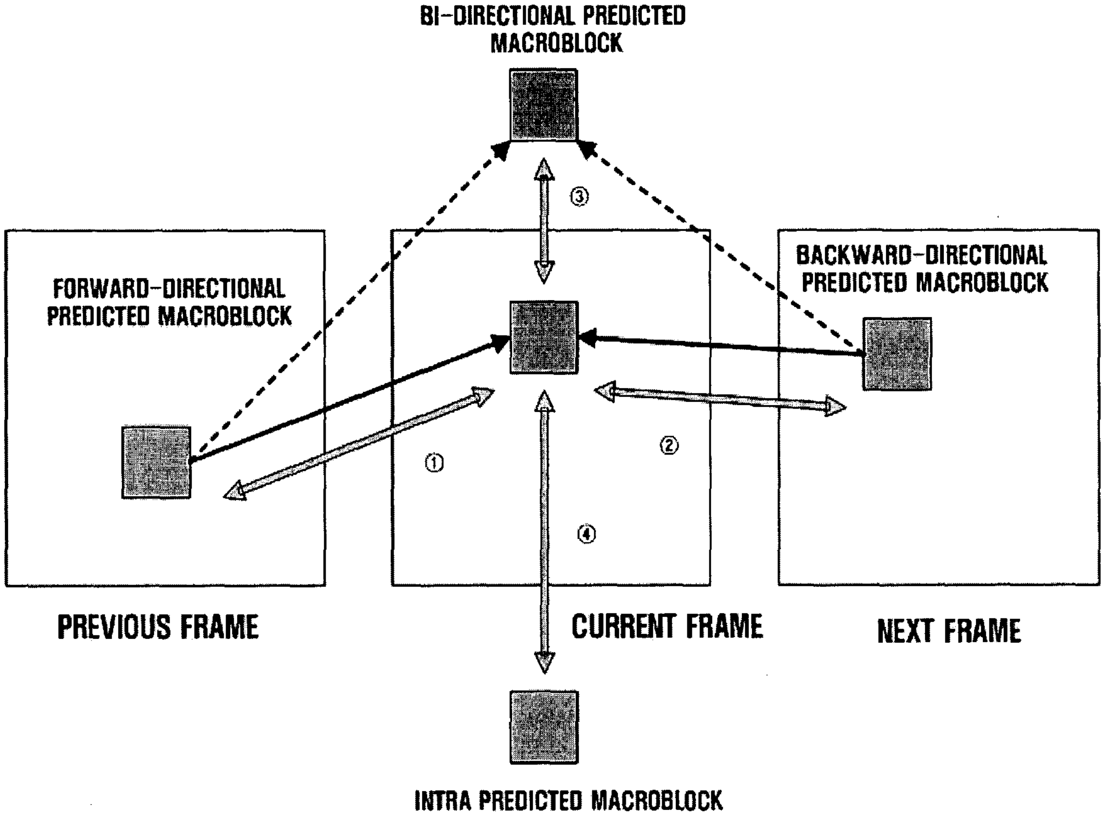
BI-DIRECTIONAL PREDICTED MACROBLOCK
③
FORWARD-DIRECTIONAL PREDICTED MACROBLOCK
BACKWARD-DIRECTIONAL PREDICTED MACROBLOCK
①
②
④
PREVIOUS FRAME
CURRENT FRAME
NEXT FRAME
INTRA PREDICTED MACROBLOCK

# FIG. 14

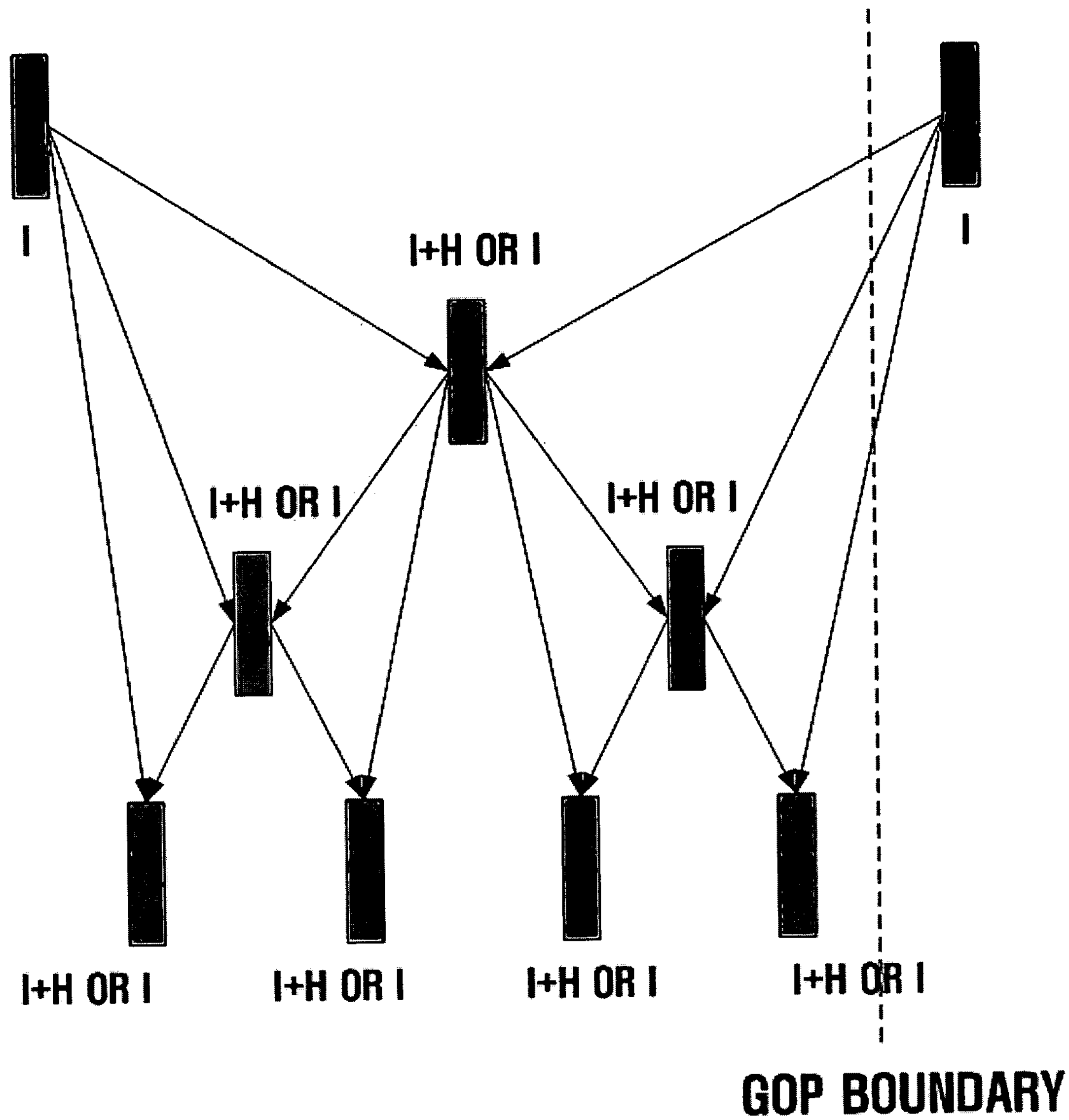

# FIG. 15a

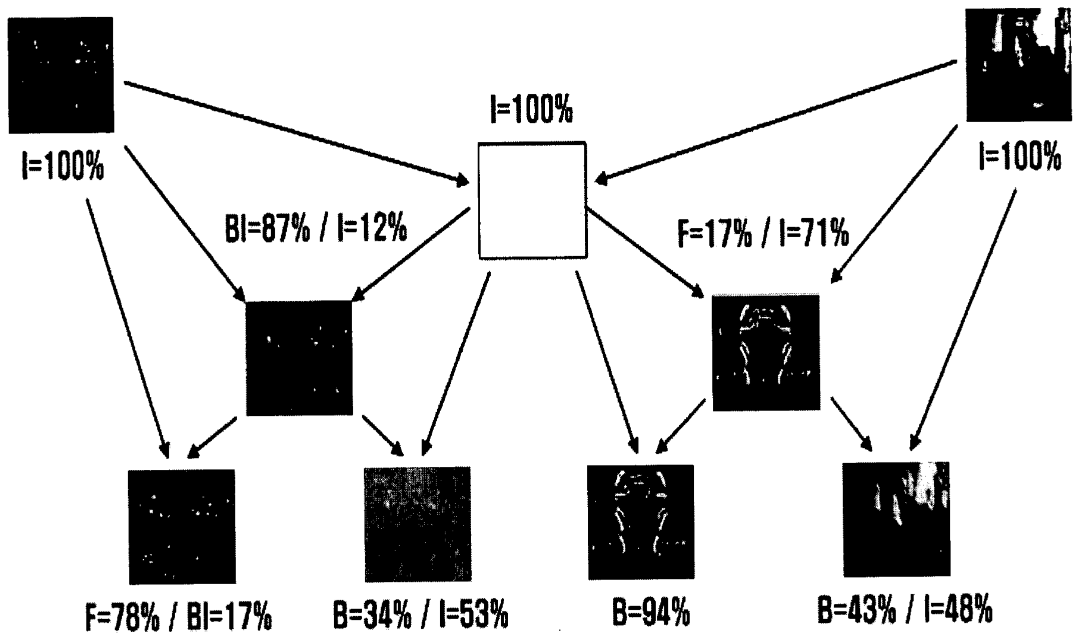

# FIG. 15b

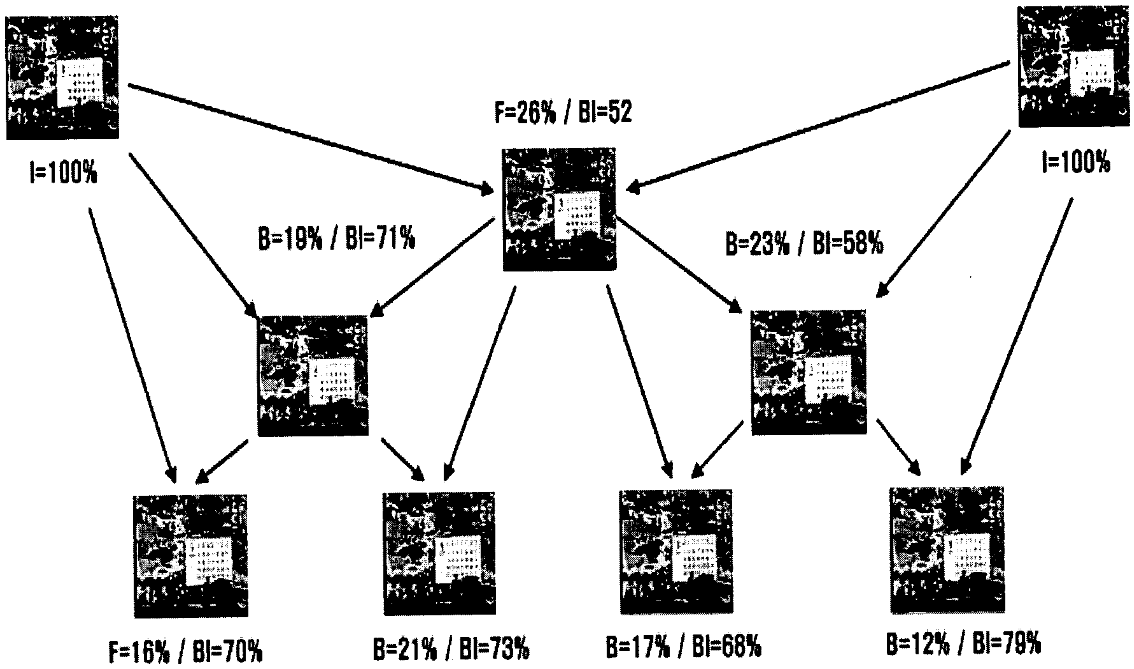
I=100%
F=26% / BI=52
I=100%
B=19% / BI=71%
B=23% / BI=58%
F=16% / BI=70%
B=21% / BI=73%
B=17% / BI=68%
B=12% / BI=79%

# FIG. 16

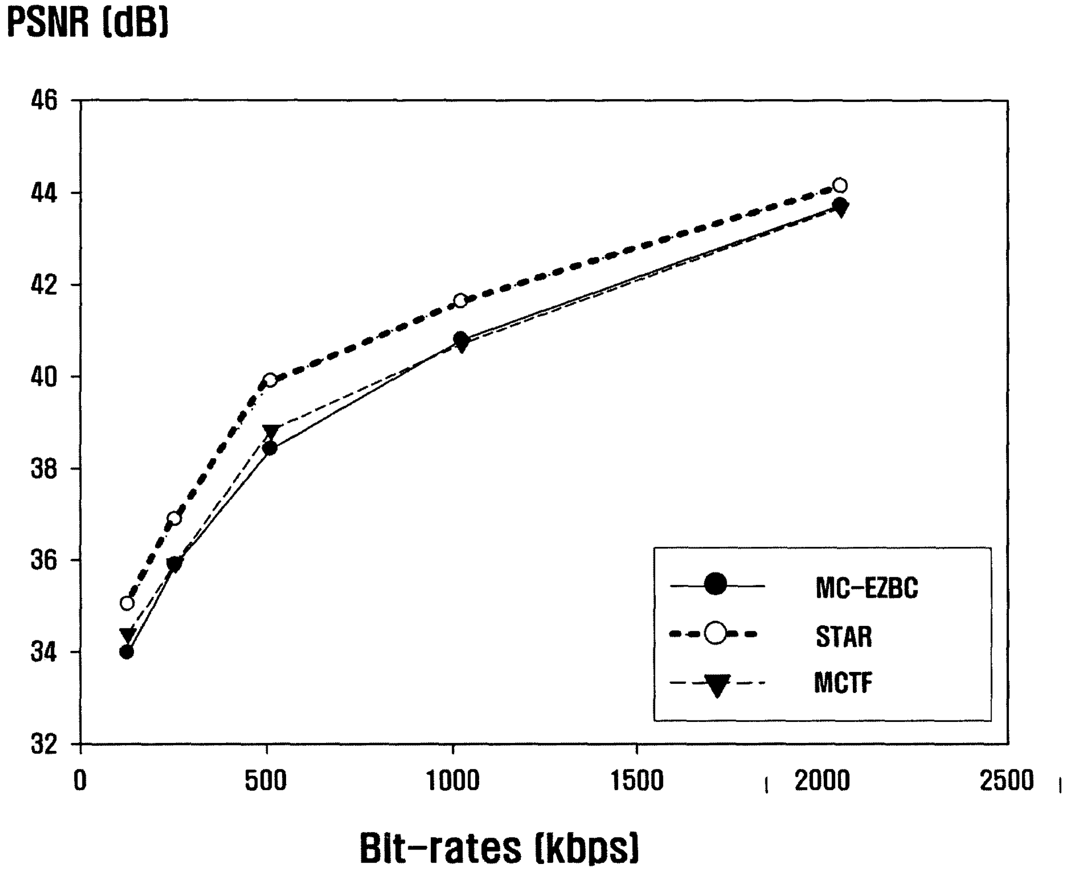
PSNR (dB)
46
44
42
40
38
36
34
32
0
500
1000
1500
2000
2500
Bit-rates (kbps)
MC-EZBC
STAR
MCTF

# FIG. 17

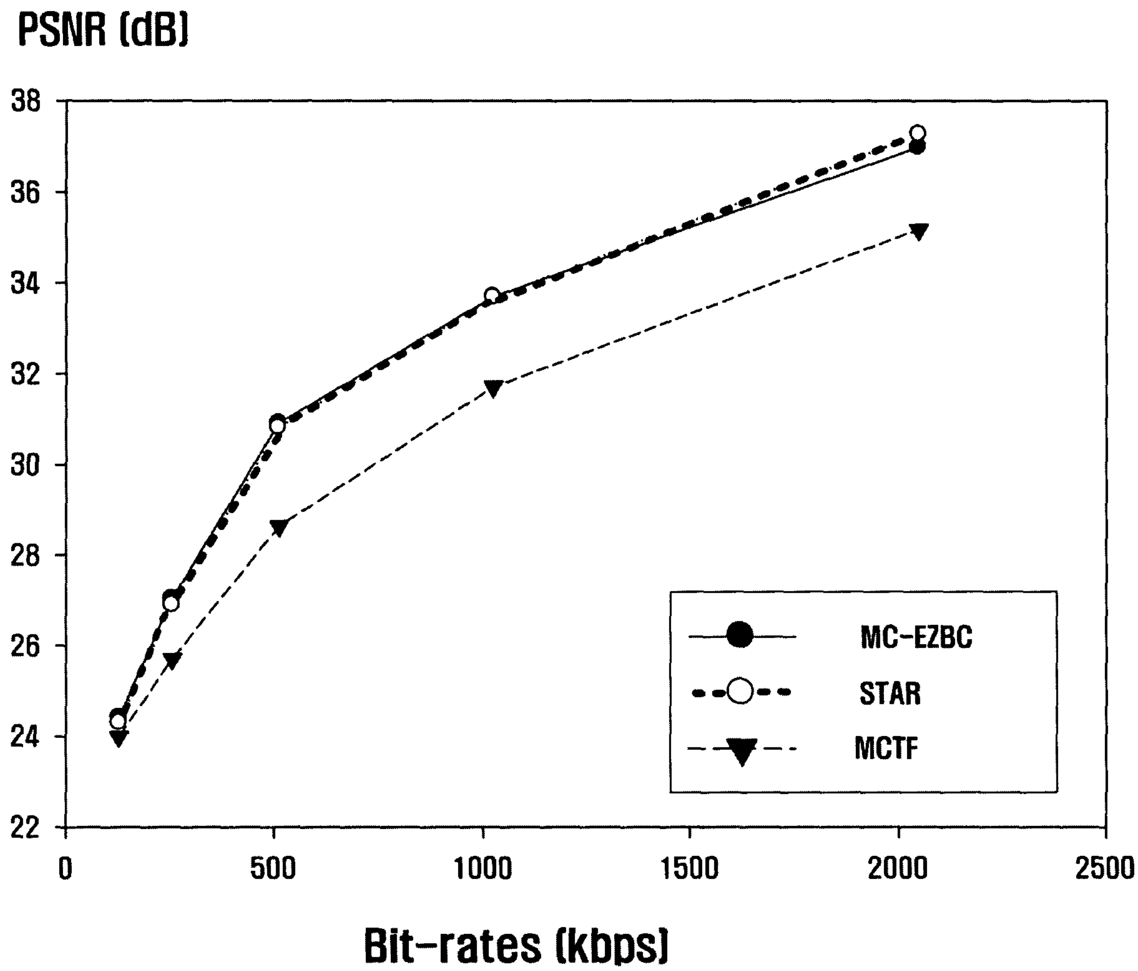
PSNR (dB)
38
36
34
32
30
28
26
24
22
0
500
1000
1500
2000
2500
Bit-rates (kbps)
MC-EZBC
STAR
MCTF

# FIG. 18

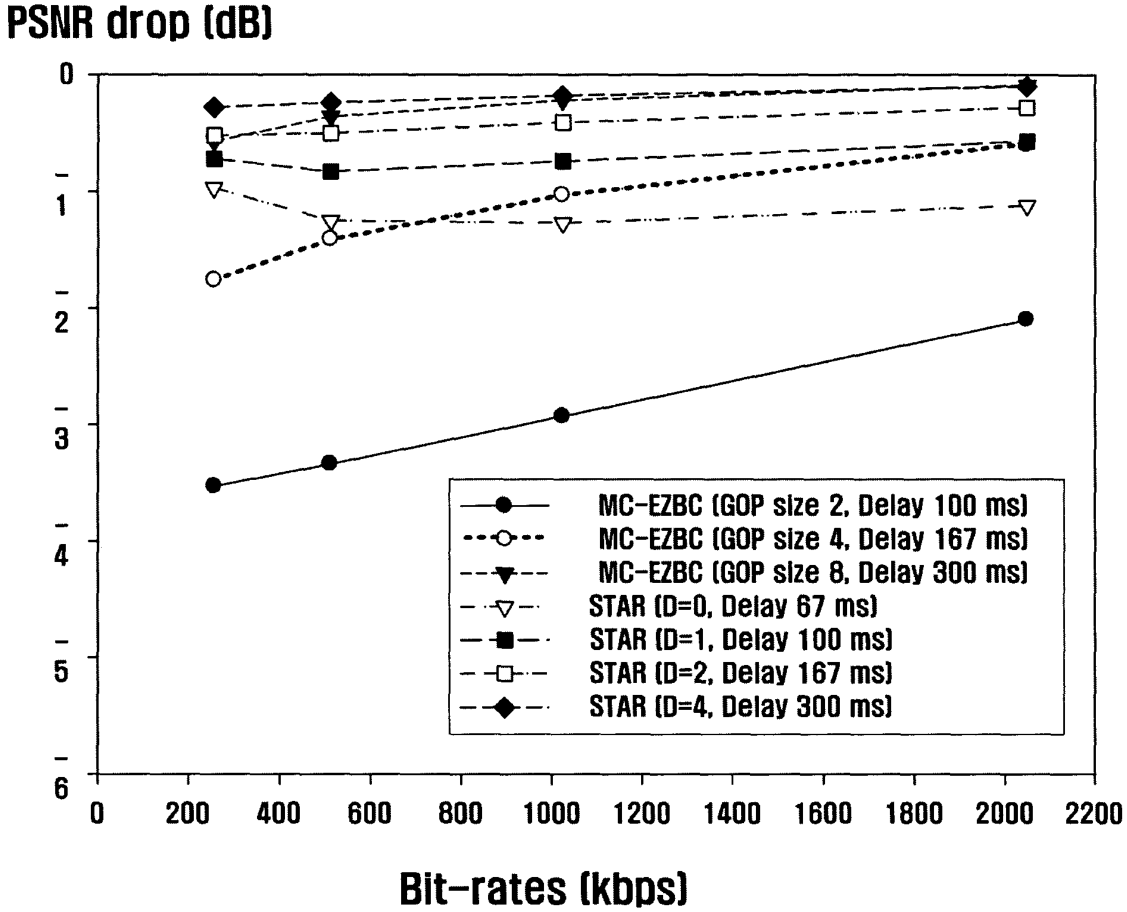
PSNR drop (dB)
0
1
2
3
4
5
6
0
200
400
600
800
1000
1200
1400
1600
1800
2000
2200
Bit-rates (kbps)
MC-EZBC (GOP size 2, Delay 100 ms)
MC-EZBC (GOP size 4, Delay 167 ms)
MC-EZBC (GOP size 8, Delay 300 ms)
STAR (D=0, Delay 67 ms)
STAR (D=1, Delay 100 ms)
STAR (D=2, Delay 167 ms)
STAR (D=4, Delay 300 ms)

# FIG. 19

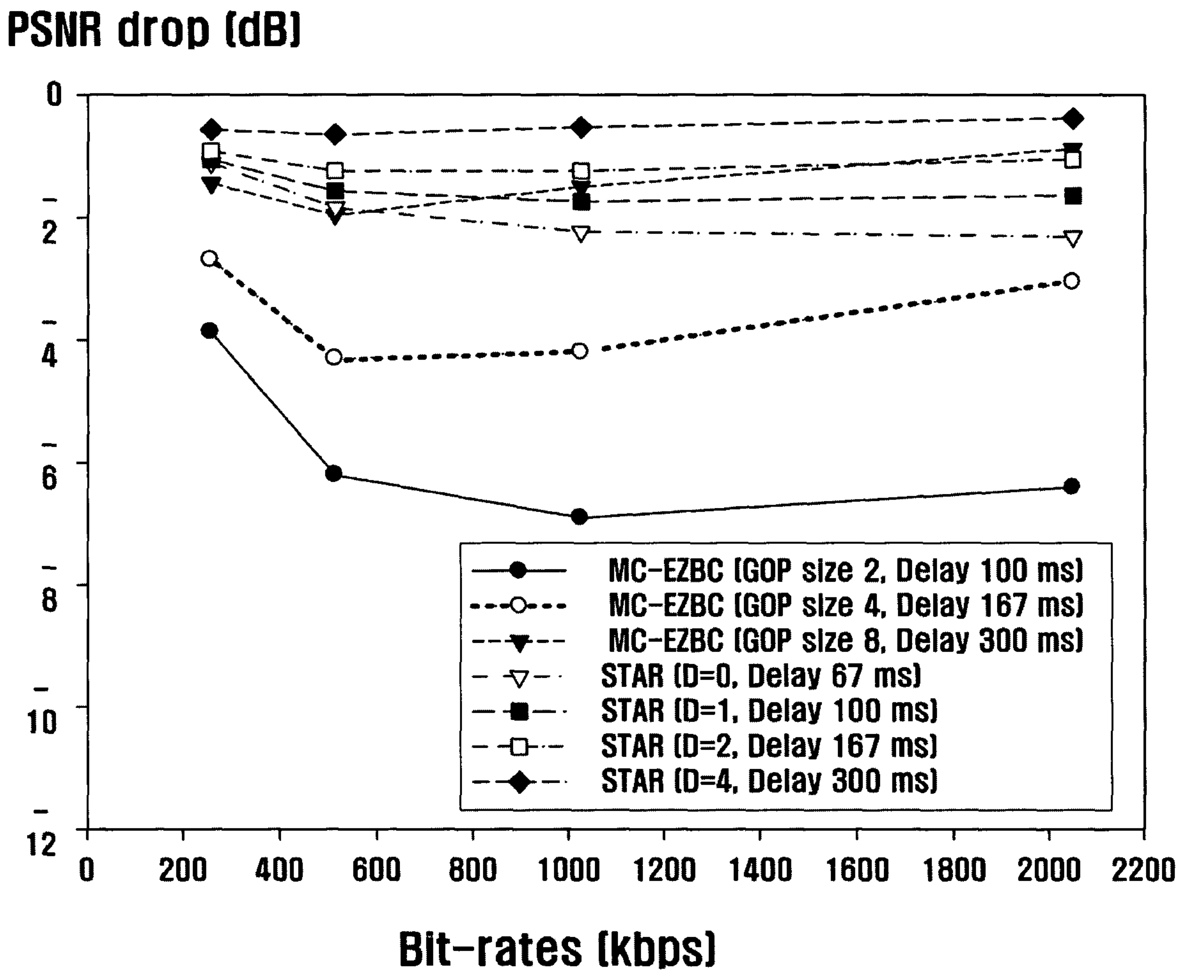
PSNR drop (dB)
0
2
4
6
8
10
12
0
200
400
600
800
1000
1200
1400
1600
1800
2000
2200
Bit-rates (kbps)
MC-EZBC (GOP size 2, Delay 100 ms)
MC-EZBC (GOP size 4, Delay 167 ms)
MC-EZBC (GOP size 8, Delay 300 ms)
STAR (D=0, Delay 67 ms)
STAR (D=1, Delay 100 ms)
STAR (D=2, Delay 167 ms)
STAR (D=4, Delay 300 ms)

FIG. 20

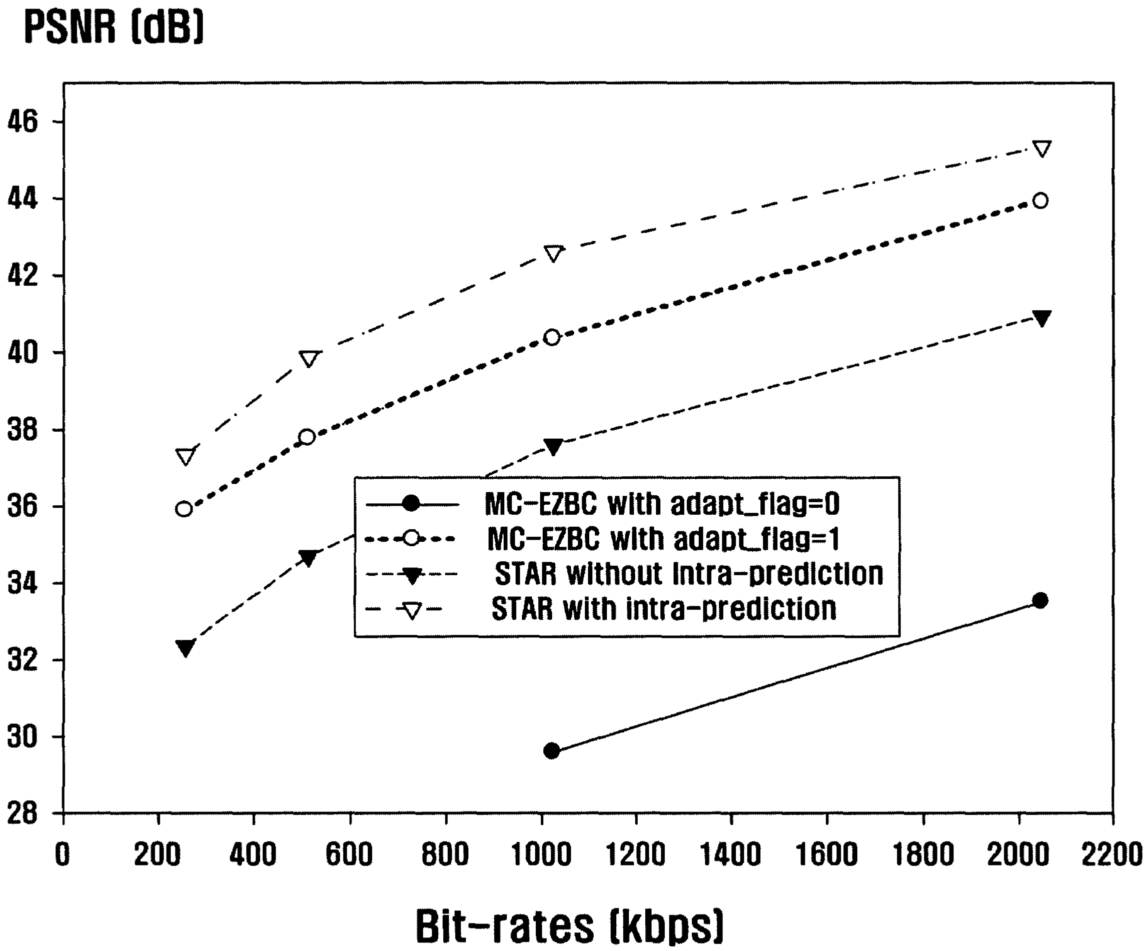
PSNR (dB)
46
44
42
40
38
36
34
32
30
28
0
200
400
600
800
1000
1200
1400
1600
1800
2000
2200
Bit-rates (kbps)
MC-EZBC with adapt_flag=0
MC-EZBC with adapt_flag=1
STAR without intra-prediction
STAR with intra-prediction